# EUROPÄISCHE PATENTANMELDUNG

(11) **EP 4 328 267 A1**
(43) Veröffentlichungstag der Anmeldung: **28.02.2024**
(21) Anmeldenummer: 22191353.6
(22) Anmeldetag: 21.08.2022
(51) Int. Cl.: C08L 23/08

(54) **GEFÄSSVERSCHLUSS MIT DICHTUNGSELEMENT, GEFÄSS MIT GEFÄSSVERSCHLUSS UND VERFAHREN ZUR HERSTELLUNG EINES VERSCHLOSSENEN GEFÄSSES**

(71) Anmelder: Silgan Holdings Inc., Stamford, CT 06901 (US)
(72) Erfinder: KINTSCHER, Juergen, 30900 Wedemark (DE); MANIERA, Andreas, 931535 Neustadt (DE)
(74) Vertreter: Ter Meer Steinmeister & Partner

(57) **Zusammenfassung**

Die Erfindung betrifft einen Gefäßverschluss mit einem Dichtungselement. Das Dichtungselement umfasst eine Polymerzusammensetzung. Die Polymerzusammensetzung umfasst zumindest 1 Gew.-% eines Cycloolefin-Polymers. Die Sauerstoffdurchlässigkeitsrate - OTR - der Polymerzusammensetzung, bestimmt nach DIN 53380, beträgt maximal 3000 cm³ m⁻² d⁻¹ bar⁻¹.

## Beschreibung

Die Erfindung betrifft einen Gefäßverschluss mit einem Dichtungselement, ein Gefäß mit dem Gefäßverschluss sowie ein Verfahren zur Herstellung eines verschlossenen Gefäßes.

Gefäßverschlüsse mit Dichtungselement sind aus dem Stand der Technik bekannt. Speziell sind Polymerzusammensetzungen für das Dichtungselement die kein PVC enthalten oder die zusätzlich zu PVC weitere polymere Komponenten enthalten relativ kostenintensiv und die Verarbeitung der Polymerzusammensetzung ist relativ schwierig.

Oft ist es nachteilig, wenn Sauerstoff in relativ großem Umfang in ein mit einem Gefäßverschluss verschlossenes und befülltes Gefäß gelangt, speziell, wenn das Füllgut ein Lebensmittel ist. Aus PVC bestehende Dichtungselemente bieten einen guten Schutz gegen ein solches Eindringen von Sauerstoff in ein Gefäß. PVC-arme Dichtungselemente erreichen dies oft nur ungenügend. Daher werden in PVC-arme Polymerzusammensetzungen für die Dichtungselemente häufig Sauerstoff-Scavenger eingesetzt. Ein Beispiel für einen Sauerstoff-Scavenger ist Natriumsulfit. Dabei ist Natriumsulfit in Zusammensetzungen für Dichtungselemente von Gefäßverschlüssen oft unerwünscht, da dieses Sulfitsalz in das Füllgut übergehen und bei Verbrauchern allergieähnliche Reaktionen hervorrufen kann.

**Eine Aufgabe der Erfindung** liegt darin, einen Gefäßverschluss mit einem Dichtungselement bereitzustellen, wobei das Dichtungselement zu akzeptablen Kosten herstellbar ist und das Dichtungselement geringe oder sehr geringe Sauerstoffdurchlässigkeitswerte aufweist.

Eine weitere Aufgabe liegt darin, einen Gefäßverschluss mit einem Dichtungselement bereitzustellen, der sterilisierbar ist, wenn der Gefäßverschluss ein Gefäß verschließt.

Eine noch weitere Aufgabe liegt darin, einen Gefäßverschluss mit einem Dichtungselement bereitzustellen, wobei das Dichtungselement eine geringe Gesamtmigration aufweist.

Gelöst wird die Aufgabe durch einen Gefäßverschluss nach Anspruch 1, ein Gefäß nach Anspruch 13 oder ein Verfahren nach Anspruch 14.

Offenbart ist ein Gefäßverschluss mit einem Dichtungselement. Das Dichtungselement umfasst eine Polymerzusammensetzung. Die Polymerzusammensetzung kann zumindest 1 Gew.-% eines Cycloolefin-Polymers umfassen. Alternativ oder zusätzlich kann die Polymerzusammensetzung eine Sauerstoffdurchlässigkeitsrate, bestimmt nach DIN 53380, von maximal 3000 cm³ m⁻² d⁻¹ bar⁻¹ aufweisen.

Allgemein beziehen sich Gew.-%-Angaben auf das Gesamtgewicht aller Komponenten einer Mischung oder Zusammensetzung. Beispielsweise beziehen sich Gew.-%-Angaben von Komponenten der Polymerzusammensetzung auf alle Komponenten der Polymerzusammensetzung.

Das Dichtungselement kann im Wesentlichen scheibenförmig oder im Wesentlichen ringförmig ausgebildet sein.

Das Dichtungselement kann eine Dicke (in axialer Richtung des Gefäßverschlusses und/oder in axialer Richtung des Gefäßes) von zumindest 0,5 mm, bevorzugt zumindest 1,0 mm, bevorzugter zumindest 1,5 mm, bevorzugter zumindest 2,0 mm, aufweisen.

Das Dichtungselement kann einen Durchmesser (senkrecht zur axialen Richtung des Gefäßverschlusses und/oder senkrecht zur axialen Richtung des Gefäßes) von höchstens 300 mm, bevorzugt höchstens 250 mm, bevorzugter höchstens 200 mm, bevorzugter höchstens 150 mm, bevorzugter höchstens 120 mm, aufweisen. Der Durchmesser des Dichtungselements kann zumindest 5 mm, bevorzugt zumindest 10 mm, bevorzugter zumindest 15 mm, bevorzugter zumindest 20 mm, aufweisen. Besonders bevorzugt weist das Dichtungselement eine Durchmessern zwischen 10 mm und 200 mm, insbesondere zwischen 15 mm und 130 mm, auf.

Die Polymerzusammensetzung kann einen Großteil des Dichtungselements ausmachen. Das Dichtungselement kann neben der Polymerzusammensetzung weitere Bestandteile umfassen. Die weiteren Bestandteile können polymere Bestandteile oder nicht-polymere Bestandteile sein. Beispielsweise kann das Dichtungselement eine oder mehrere Folien umfassen. Die Folie kann eine polymere oder eine nicht-polymere Folie sein, bevorzugt ist die Folie eine Metallfolie. Insbesondere besteht das Dichtungselement aus der Polymerzusammensetzung.

Ein Cycloolefin-Polymer ist ein Polymer, das aus zumindest einem cyclischen (olefinischen) Monomer hergestellt ist. Das zumindest eine cyclische Monomer kann mit einem weiteren Monomer copolymerisiert sein, insbesondere mit einem nicht-cyclischen Monomer. Das weitere Monomer kann ein Olefin, insbesondere ein alpha-Olefin sein. Das Cycloolefin-Polymer kann ebenso durch eine Ringöffnungspolymerisation von zumindest einem cyclischen (olefinischen) Monomer hergestellt sein. Nach der Polymerisation des zumindest einen cyclischen (olefinischen) Monomers kann das Polymer hydriert werden.

Das Cycloolefin-Polymer kann keine von Styrol erhaltenen Abschnitte aufweisen. Zur Polymerisation des Cycloolefin-Polymers kann kein Styrol als (Co)Monomer eingesetzt worden sein.

Das Cycloolefin-Polymer kann keine aromatische Gruppe enthalten. Das Cycloolefin-Polymer kann frei von einer oder mehreren aromatischen Gruppen sein.

In dem Cycloolefin-Polymer kann zumindest ein Ring (Cyclus) in die Hauptkette oder das Rückgrat (Backbone) des Cycloolefin-Polymers integriert oder enthalten sein. Der Ring (Cyclus) kann in die Hauptkette oder das Rückgrat (Backbone) kovalent gebunden sein. Die Hauptkette oder das Rückgrat (Backbone) kann die längste Serie von kovalent gebundenen Atomen sein. Durch die Hauptkette oder das Rückgrat (Backbone) kann die kontinuierliche Kette des Polymers gebildet sein.

Das Cycloolefin-Polymer kann eine Lichtdurchlässigkeit, bestimmt nach ISO 13468-2, von zumindest 50 %, bevorzugt zumindest 60 %, bevorzugter zumindest 70 %, bevorzugter zumindest 75 %, bevorzugter zumindest 80 %, bevorzugter zumindest 82 %, bevorzugter zumindest 85 %, bevorzugter zumindest 87 %, bevorzugter zumindest 90 %, bevorzugter zumindest 92 %, bevorzugter zumindest 95 %, aufweisen.

Das Cycloolefin-Polymer kann eine Wasserabsorption, bestimmt nach ISO 62, von höchstens 10 %, bevorzugt höchstens 9 %, bevorzugter höchstens 8 %, bevorzugter höchstens 7 %, bevorzugter höchstens 6 %, bevorzugter höchstens 5 %, bevorzugter höchstens 4 %, bevorzugter höchstens 3 %, bevorzugter höchstens 2 %, bevorzugter höchstens 1 %, bevorzugter höchstens 0,5 %, bevorzugter höchstens 0,2 %, bevorzugter höchstens 0,1 %, bevorzugter höchstens 0,05 %, aufweisen.

Das Cycloolefin-Polymer kann eine Shore A Härte (bestimmt nach DIN ISO 7619 bei einer Temperatur von 23 °C und einer Haltezeit von 15 s) von zumindest 40 aufweisen. Bevorzugt beträgt die Shore A Härte des Cycloolefin-Polymers zumindest 50, bevorzugter zumindest 60, bevorzugter zumindest 70, bevorzugter zumindest 80, bevorzugter zumindest 90.

Das Cycloolefin-Polymer kann eine Shore D Härte (bestimmt nach DIN ISO 7619 bei einer Temperatur von 23 °C und einer Haltezeit von 15 s) von zumindest 20 aufweisen. Bevorzugt beträgt die Shore D Härte des Cycloolefin-Polymers zumindest 30, bevorzugter zumindest 40, bevorzugter zumindest 50, bevorzugter zumindest 60, bevorzugter zumindest 70, bevorzugter zumindest 75.

Die Shore D Härte des Cycloolefin-Polymers kann höchstens 90, bevorzugt höchstens 80, bevorzugter höchstens 70, bevorzugter höchstens 60, bevorzugter höchstens 50, betragen. Insbesondere beträgt die Shore D Härte des Cycloolefin-Polymers zwischen 70 und 85 oder zwischen 72 und 87.

Das Cycloolefin-Copolymer kann eine Dichte (bestimmt nach ISO 1183) von zumindest von zumindest 0,850 g cm⁻³ aufweisen. Bevorzugt beträgt die Dichte des Cycloolefin-Polymers zumindest 0,870 g cm⁻³, bevorzugter zumindest 0,890 g cm⁻³, bevorzugter zumindest 0,910 g cm⁻³, bevorzugter zumindest 0,930 g cm⁻³, bevorzugter zumindest 0,950 g cm⁻³, bevorzugter zumindest 0,970 g cm⁻³, bevorzugter zumindest 0,990 g cm⁻³, bevorzugter zumindest 1,000 g cm⁻³, bevorzugter zumindest 1,010 g cm⁻³.

Die Dichte des Cycloolefin-Polymers beträgt bevorzugt zwischen 0,900 g cm⁻³ und 1,100 g cm⁻³, bevorzugter zwischen 0,920 g cm⁻³ und 1,050 g cm⁻³, bevorzugter zwischen 0,930 g cm⁻³ und 1,030 g cm⁻³. Besonders bevorzugt beträgt die Dichte des Cycloolefin-Polymers zwischen 0,930 g cm⁻³ und 0,950 g cm⁻³, oder zwischen 0,970 g cm⁻³ und 0,990 g cm⁻³, oder zwischen 1,000 g cm⁻³ und 1,020 g cm⁻³, oder zwischen 1,010 g cm⁻³ und 1,030 g cm⁻³.

Das Cycloolefin-Copolymer kann eine Glasübergangstemperatur (bestimmt nach ISO 11357-1,-2,-3, 10 °C/min) von zumindest -20 °C aufweisen. Bevorzugt beträgt die Glasübergangstemperatur des Cycloolefin-Copolymers zumindest 0 °C, bevorzugter zumindest 3 °C, bevorzugter zumindest 40 °C, bevorzugter zumindest 60 °C, bevorzugter zumindest 70 °C, bevorzugter zumindest 90 °C, bevorzugter zumindest 110 °C, bevorzugter zumindest 125 °C, bevorzugter zumindest 130 °C, bevorzugter zumindest 150 °C, bevorzugter zumindest 170 °C.

Die Glasübergangstemperatur des Cycloolefin-Copolymers kann höchstens 200 °C, bevorzugt höchstens 190 °C, bevorzugter höchstens 180 °C, bevorzugter höchstens 170 °C, bevorzugter höchstens 160 °C, bevorzugter höchstens 150 °C, bevorzugter höchstens 140 °C, bevorzugter höchstens 120 °C, bevorzugter höchstens 100 °C, bevorzugter höchstens 80 °C, bevorzugter höchstens 70 °C, bevorzugter höchstens 50 °C, bevorzugter höchstens 30 °C, bevorzugter höchstens 10 °C, betragen.

Die Glasübergangstemperatur des Cycloolefin-Copolymers kann zwischen 1 °C und 11 °C, oder zwischen 60 °C und 70 °C, oder zwischen 73 °C und 83 °C, oder zwischen 74 °C und 84 °C, oder zwischen 130 °C und 140 °C, oder zwischen 129 °C und 139 °C, oder zwischen 133 °C und 143 °C, oder zwischen 153 °C und 163 °C, oder zwischen 173 °C und 183 °C, betragen.

Ein Monomer oder ein Comonomer des Cycloolefin-Polymers kann ein monocyclisches oder polycyclisches Olefin sein. Nach der Polymerisation des Cycloolefin-Polymers kann das Cycloolefin-Polymer zumindest eine monocyclische Einheit oder polycyclische Einheit umfassen. Die monocyclische Einheit oder polycyclische Einheit kann durch das monocyclische oder polycyclische Monomer oder Comonomer gebildet sein.

Bevorzugt ist das Monomer oder Comonomer des Cycloolefin-Polymers ein monocyclisches oder polycyclisches C3- bis C20-Olefin. Bevorzugter ist das Monomer oder Comonomer des Cycloolefin-Polymers ein monocyclisches oder polycyclisches C5- bis C20-Olefin. Bevorzugter ist das Monomer oder Comonomer des Cycloolefin-Polymers ein monocyclisches oder polycyclisches C7- bis C17-Olefin, bevorzugter ein monocyclisches oder polycyclisches C7-bis C12-Olefin. Besonders bevorzugt ist das Monomer oder Comonomer des Cycloolefin-Polymers ein monocyclisches oder polycyclisches C7-Olefin. Beispielsweise ist das Monomer oder Comonomer des Cycloolefin-Polymers Norbornen (Bicyclo[2.2.1]hept-2-en).

Das Monomer oder Comonomer des Cycloolefin-Polymers kann ein monocyclisches oder polycyclisches Alken sein. Das Monomer oder Comonomer des Cycloolefin-Polymers kann ein monocyclisches C3- bis C8-Olefin (Mono-Cyclo-Propen bis Mono-Cyclo-Octen) sein.

Das Monomer oder Comonomer des Cycloolefin-Polymers kann zumindest zwei Ringe (Cyclen) enthalten. Bevorzugt enthält das Monomer oder Comonomer des Cycloolefin-Polymers zwei bis zwanzig, bevorzugter zwei bis fünfzehn, bevorzugter zwei bis zehn, bevorzugter zwei bis acht Ringe (Cyclen). Das Monomer oder Comonomer des Cycloolefin-Polymers kann ein Bis- bis Octacyclo-Olefin sein. Passende Monomere oder Comonomere des Cycloolefin-Polymers sind auf den Seiten 4 bis 17, insbesondere auf den Seiten 6, 7 und/oder in den Tabellen 1 und 2, von EP 0 283 164 A2 beschrieben, dessen Inhalt durch Bezugnahme in die vorliegende Offenbarung aufgenommen wird.

Das Monomer oder Comonomer des Cycloolefin-Polymers kann ein Homocyclus sein. Bevorzugt ist das Monomer oder Comonomer des Cycloolefin-Polymers ein Kohlenstoff-Homocyclus.

Das Monomer oder Comonomer des Cycloolefin-Polymers kann ein Heterocyclus sein. Der Heterocyclus kann ein oder mehrere Heteroatome enthalten. Bevorzugt enthält der Heterocyclus Stickstoff, Sauerstoff und/oder Schwefel.

Das Monomer oder Comonomer des Cycloolefin-Polymers kann unsubstituiert oder substituiert sein. Bevorzugt enthält das Monomer oder Comonomer des Cycloolefin-Polymers zumindest einen der folgenden Substituenten: Alkenyl, Alkyl, Hydroxyl, Carboxyl, Carboxy-Alkyl und Halogen.

Das Cycloolefin-Polymer kann unsubstituiert oder substituiert sein. Bevorzugt enthält das Cycloolefin-Polymer zumindest einen der folgenden Substituenten: Alkenyl, Alkyl, Hydroxyl, Carboxyl, Carboxy-Alkyl und Halogen.

Allgemein sind manche Moleküle (Monomere oder Comonomere) hierin nach der Anzahl ihrer Kohlenstoffatome bezeichnet. Beispielsweise ist ein C5-Olefin ein Olefin mit 5 Kohlenstoffatomen und ein C20-Olefin ist ein Olefin mit 20 Kohlenstoffatomen.

Das Cycloolefin-Polymer kann durch eine ringerhaltende oder durch eine ringöffnende Polymerisation hergestellt sein.

Bei einer ringerhaltenden Polymerisation kann ein Ring (Cyclus) oder mehrere Ringe (Cyclen) eines Monomers nach der Polymerisation in dem Polymer vorhanden sein. Mit anderen Worten, durch die Polymerisation kann ein Ring (Cyclus) oder mehrere Ringe (Cyclen) eines Monomers nicht geöffnet werden.

Bei einer ringöffnenden Polymerisation kann ein Ring (Cyclus) oder mehrere Ringe (Cyclen) eines Monomers nach der Polymerisation in dem Polymer nicht vorhanden sein. Mit anderen Worten, durch die Polymerisation kann ein Ring (Cyclus) oder mehrere Ringe (Cyclen) eines Monomers geöffnet werden.

Insbesondere ist das Cycloolefin-Polymer ein Cycloolefin-Copolymer. Das Cycloolefin-Copolymer kann aus zumindest zwei unterschiedlichen Monomoren hergestellt sein. Bevorzugt ist das Cycloolefin-Copolymer ein Cycloolefin-Bipolymer. In einem Cycloolefin-Bipolymer wurden zur Polymerisation genau zwei unterschiedliche Arten von Monomeren eingesetzt.

Ein Comonomer des Cycloolefin-Copolymers kann ein C2- bis C10-(alpha)Olefin sein. Bevorzugt ist ein Comonomer des Cycloolefin-Copolymers ein C2- bis C8-(alpha)Olefin, bevorzugter ein C2- bis C6-(alpha)Olefin. Ein Comonomer des Cycloolefin-Copolymers kann Ethen, alpha-Buten oder alpha-Hexen sein. Am meisten bevorzugt ist ein Comonomer des Cycloolefin-Copolymers Ethen. Das Comonomer kann als nicht-cyclisches Comonomer bezeichnet werden.

Ein monocyclisches oder polycyclisches Olefin als Comonomer des Cycloolefin-Copolymers kann einen Comonomeranteil von mindestens 10 mol-% aufweisen. Bevorzugt weist ein monocyclisches oder polycyclisches Olefin als Comonomer des Cycloolefin-Copolymers einen Comonomeranteil von mindestens 20 mol-%, bevorzugter von mindestens 40 mol-%, bevorzugter von mindestens 60 mol-%, bevorzugter von mindestens 65 mol-%, auf.

Ein monocyclisches oder polycyclisches Olefin als Comonomer des Cycloolefin-Copolymers kann einen Comonomeranteil von höchstens 90 mol-% aufweisen. Bevorzugt weist ein monocyclisches oder polycyclisches Olefin als Comonomer des Cycloolefin-Copolymers einen Comonomeranteil von höchstens 75 mol-%, bevorzugter von höchstens 60 mol-%, bevorzugter von höchstens 50 mol-%, bevorzugter von höchstens 40 mol-%, auf.

Der Comonomeranteil eines monocyclischen oder polycyclischen Olefins als Comonomer des Cycloolefin-Copolymers kann zwischen 25 mol-% und 35 mol-%, oder zwischen 45 mol-% und 55 mol-%, oder zwischen 60 mol-% und 70 mol-%, oder zwischen 60 mol-% und 90 mol-%, insbesondere zwischen 70 mol-% und 80 mol-%, liegen.

Das nicht-cyclische Comonomer des Cycloolefin-Copolymers kann einen Comonomeranteil von höchstens 90 mol-%, bevorzugt von höchstens 80 mol-%, bevorzugter von höchstens 60 mol-%, bevorzugter von höchstens 40 mol-%, bevorzugter von höchstens 35 mol-%, aufweisen. Das nicht-cyclische Comonomer kann jedes hierin offenbart nicht-cyclische Comonomer und insbesondere ein oben näher beschriebenes nicht-cyclisches Comonomer sein. Beispielsweise ist das nicht-cyclische Comonomer ein C2- bis C10-(alpha)Olefin, besonders bevorzugt Ethen.

Das nicht-cyclische Comonomer des Cycloolefin-Copolymers kann einen Comonomeranteil von mindestens 10 mol-%, bevorzugt von mindestens 25 mol-%, bevorzugter von mindestens 40 mol-%, bevorzugter von mindestens 60 mol-%, bevorzugter von mindestens 65 mol-%, aufweisen. Das nicht-cyclische Comonomer kann jedes hierin offenbart nicht-cyclische Comonomer und insbesondere ein oben näher beschriebenes nicht-cyclisches Comonomer sein. Beispielsweise ist das nicht-cyclische Comonomer ein C2- bis C10-(alpha)Olefin, besonders bevorzugt Ethen.

Das nicht-cyclische Comonomer des Cycloolefin-Copolymers kann einen Comonomeranteil zwischen 65 mol-% und 75 mol-%, oder zwischen 45 mol-% und 55 mol-%, oder zwischen 30 mol-% und 40 mol-%, oder zwischen 10 mol-% und 40 mol-%, insbesondere zwischen 20 mol-% und 30 mol-% aufweisen. Das nicht-cyclische Comonomer kann jedes hierin offenbart nicht-cyclische Comonomer und insbesondere ein oben näher beschriebenes nicht-cyclisches Comonomer sein. Beispielsweise ist das nicht-cyclische Comonomer ein C2-bis C10-(alpha)Olefin, besonders bevorzugt Ethen.

Ein monocyclisches oder polycyclisches Olefin als Comonomer des Cycloolefin-Copolymers kann einen Comonomeranteil von mindestens 10 Gew.-% aufweisen. Bevorzugt weist ein monocyclisches oder polycyclisches Olefin als Comonomer des Cycloolefin-Copolymers einen Comonomeranteil von mindestens 20 Gew.-%, bevorzugter von mindestens 25 Gew.-%, bevorzugter von mindestens 40 Gew.-%, bevorzugter von mindestens 50 Gew.-%, bevorzugter von mindestens 60 Gew.-%, bevorzugter von mindestens 70 Gew.-%, bevorzugter von mindestens 80 Gew.-%, auf.

Ein monocyclisches oder polycyclisches Olefin als Comonomer des Cycloolefin-Copolymers kann einen Comonomeranteil von höchstens 95 Gew.-% aufweisen. Bevorzugt weist ein monocyclisches oder polycyclisches Olefin als Comonomer des Cycloolefin-Copolymers einen Comonomeranteil von höchstens 90 Gew.-%, bevorzugter von höchstens 80 Gew.-%, bevorzugter von höchstens 70 Gew.-%, bevorzugter von höchstens 60 Gew.-%, bevorzugter von höchstens 50 Gew.-%, bevorzugter von höchstens 40 Gew.-%, bevorzugter von höchstens 35 Gew.-%, auf.

Der Comonomeranteil eines monocyclischen oder polycyclischen Olefins als Comonomer des Cycloolefin-Copolymers kann zwischen 25 Gew.-% und 35 Gew.-%, oder zwischen 45 Gew.-% und 55 Gew.-%, oder zwischen 60 Gew.-% und 70 Gew.-%, oder zwischen 70 Gew.-% und 80 Gew.-%, oder zwischen 72 Gew.-% und 82 Gew.-%, oder zwischen 78 Gew.-% und 88 Gew.-%, oder zwischen 81 Gew.-% und 91 Gew.-%, liegen.

Das nicht-cyclische Comonomer des Cycloolefin-Copolymers kann einen Comonomeranteil von höchstens 90 Gew.-%, bevorzugt von höchstens 80 Gew.-%, bevorzugter von höchstens 70 Gew.-%, bevorzugter von höchstens 60 Gew.-%, bevorzugter von höchstens 50 Gew.-%, bevorzugter von höchstens 40 Gew.-%, bevorzugter von höchstens 30 Gew.-%, bevorzugter von höchstens 28 Gew.-%, bevorzugter von höchstens 22 Gew.-%, bevorzugter von höchstens 19 Gew.-%, aufweisen. Das nicht-cyclische Comonomer kann jedes hierin offenbart nicht-cyclische Comonomer und insbesondere ein oben näher beschriebenes nicht-cyclisches Comonomer sein. Beispielsweise ist das nicht-cyclische Comonomer ein C2-bis C10-(alpha)Olefin, besonders bevorzugt Ethen.

Das nicht-cyclische Comonomer des Cycloolefin-Copolymers kann einen Comonomeranteil von mindestens 5 Gew.-%, bevorzugt von mindestens 9 Gew.-%, bevorzugter von mindestens 12 Gew.-%, bevorzugter von mindestens 18 Gew.-%, bevorzugter von mindestens 20 Gew.-%, bevorzugter von mindestens 30 Gew.-%, bevorzugter von mindestens 40 Gew.-%, bevorzugter von mindestens 45 Gew.-%, bevorzugter von mindestens 50 Gew.-%, bevorzugter von mindestens 60 Gew.-%, bevorzugter von mindestens 65 Gew.-%, aufweisen. Das nicht-cyclische Comonomer kann jedes hierin offenbart nicht-cyclische Comonomer und insbesondere ein oben näher beschriebenes nicht-cyclisches Comonomer sein. Beispielsweise ist das nicht-cyclische Comonomer ein C2-bis C10-(alpha)Olefin, besonders bevorzugt Ethen.

Das nicht-cyclische Comonomer des Cycloolefin-Copolymers kann einen Comonomeranteil zwischen 9 Gew.-% und 19 Gew.-%, oder zwischen 12 Gew.-% und 22 Gew.-%, oder zwischen 18 Gew.-% und 28 Gew.-%, oder zwischen 20 Gew.-% und 30 Gew.-%, oder zwischen 30 Gew.-% und 40 Gew.-%, oder zwischen 45 Gew.-% und 55 Gew.-%, oder zwischen 65 Gew.-% und 75 Gew.-%, aufweisen. Das nicht-cyclische Comonomer kann jedes hierin offenbart nicht-cyclische Comonomer und insbesondere ein oben näher beschriebenes nicht-cyclisches Comonomer sein. Beispielsweise ist das nicht-cyclische Comonomer ein C2- bis C10-(alpha)Olefin, besonders bevorzugt Ethen.

Beispielsweise ist das Cycloolefin-Copolymer ein Ethen-Norbornen-Copolymer, insbesondere ein Ethen-Norbornen-Bipolymer.

Das Cycloolefin-Polymer kann zu zumindest 5 Gew.-% in der Polymerzusammensetzung enthalten sein. Bevorzugt ist das Cycloolefin-Polymer zu zumindest 10 Gew.-%, bevorzugter zu zumindest 15 Gew.-%, bevorzugter zu zumindest 20 Gew.-%, bevorzugter zu zumindest 25 Gew.-%, bevorzugter zu zumindest 30 Gew.-%, bevorzugter zu zumindest 35 Gew.-%, bevorzugter zu zumindest 40 Gew.-%, bevorzugter zu zumindest 45 Gew.-%, bevorzugter zu zumindest 50 Gew.-%, bevorzugter zu zumindest 55 Gew.-%, bevorzugter zu zumindest 60 Gew.-%, bevorzugter zu zumindest 65 Gew.-%, bevorzugter zu zumindest 70 Gew.-%, bevorzugter zu zumindest 75 Gew.-%, bevorzugter zu zumindest 80 Gew.-%, bevorzugter zu zumindest 85 Gew.-%, bevorzugter zu zumindest 90 Gew.-%, bevorzugter zu zumindest 95 Gew.-%, in der Polymerzusammensetzung enthalten.

Das Cycloolefin-Polymer kann zu höchstens 95 Gew.-% in der Polymerzusammensetzung enthalten sein. Bevorzugt ist das Cycloolefin-Polymer zu höchstens 90 Gew.-%, bevorzugter zu höchstens 85 Gew.-%, bevorzugter zu höchstens 80 Gew.-%, bevorzugter zu höchstens 75 Gew.-%, bevorzugter zu höchstens 70 Gew.-%, bevorzugter zu höchstens 65 Gew.-%, bevorzugter zu höchstens 60 Gew.-%, bevorzugter zu höchstens 55 Gew.-%, bevorzugter zu höchstens 50 Gew.-%, bevorzugter zu höchstens 45 Gew.-%, bevorzugter zu höchstens 40 Gew.-%, bevorzugter zu höchstens 35 Gew.-%, bevorzugter zu höchstens 30 Gew.-%, bevorzugter zu höchstens 25 Gew.-%, bevorzugter zu höchstens 20 Gew.-%, bevorzugter zu höchstens 15 Gew.-%, bevorzugter zu höchstens 10 Gew.-%, bevorzugter zu höchstens 5 Gew.-%, in der Polymerzusammensetzung enthalten.

Das Cycloolefin-Polymer kann zwischen 5 Gew.-% und 90 Gew.-%, bevorzugt zwischen 5 Gew.-% und 80 Gew.-%, bevorzugter zwischen 5 Gew.-% und 70 Gew.-%, bevorzugter zwischen 5 Gew.-% und 60 Gew.-%, bevorzugter zwischen 5 Gew.-% und 50 Gew.-%, bevorzugter zwischen 5 Gew.-% und 40 Gew.-%, bevorzugter zwischen 10 Gew.-% und 30 Gew.-%, bevorzugter zwischen 15 Gew.-% und 30 Gew.-%, bevorzugter zwischen 20 Gew.-% und 30 Gew.-%, bevorzugter zwischen 22 Gew.-% und 26 Gew.-%, in der Polymerzusammensetzung enthalten sein.

Das Cycloolefin-Polymer kann zwischen 50 Gew.-% und 95 Gew.-%, bevorzugt zwischen 60 Gew.-% und 95 Gew.-%, bevorzugter zwischen 65 Gew.-% und 90 Gew.-%, bevorzugter zwischen 70 Gew.-% und 90 Gew.-%, in der Polymerzusammensetzung enthalten sein.

Insbesondere ist das Cycloolefin-Polymer zwischen 70 Gew.-% und 80 Gew.-% oder zwischen 80 Gew.-% und 90 Gew.-% in der Polymerzusammensetzung enthalten.

Die Polymerzusammensetzung kann ein weiteres Polymer umfassen. Das weitere Polymer kann zu bis zu 95 Gew.-% in der Polymerzusammensetzung enthalten sein. Bevorzugt ist das weitere Polymer zwischen 1 Gew.-% und 95 Gew.-% in der Polymerzusammensetzung enthalten.

Beispielsweise ist das Cycloolefin-Polymer ein erstes Polymer in der Polymerzusammensetzung und das weitere Polymer ist ein zweites Polymer in der Polymerzusammensetzung. Die Polymerzusammensetzung kann zumindest zwei (verschiedene oder verschiedenartige) Polymere, bevorzugt zumindest drei (verschiedene oder verschiedenartige) Polymere, bevorzugter zumindest vier (verschiedene oder verschiedenartige) Polymere, umfassen.

Allgemein kann ein hierin offenbartes Polymer bei 23 °C und 1 bar fest oder flüssig (Aggregatzustand fest oder flüssig) sein, insbesondere ist ein hierin offenbartes Polymer bei 23 °C und 1 bar fest.

Das weitere Polymer der Polymerzusammensetzung kann ein Copolymer sein, insbesondere ein random-Copolymer oder ein Block-Copolymer. Das weitere Polymer kann ein Polyolefin sein.

Bevorzugt ist Ethen ein Comonomer des weiteren Polymers als Copolymer. Alternativ oder zusätzlich kann zumindest ein C3 bis C16(alpha-)Olefin ein Comonomer des Copolymers sein.

Bevorzugt ist Ethen ein Comonomer des Copolymers und zumindest ein C3 bis C16(alpha-)Olefin ein Comonomer des Copolymers. Bevorzugter ist Ethen ein Comonomer des Copolymers und zumindest ein C3 bis C8(alpha-)Olefin ein Comonomer des Copolymers. Bevorzugter ist Ethen ein Comonomer des Copolymers und zumindest eines von Propen, alpha-Buten, alpha-Penten, alpha-Hexen, alpha-Hepten und alpha-Octen ein Comonomer des Copolymers. Besonders bevorzugt ist Ethen ein Comonomer des Copolymers und alpha-Buten oder alpha-Octen ein Comonomer des Copolymers.

Das weitere Polymer als Copolymer kann ein Bipolymer sein.

Das weitere Polymer der Polymerzusammensetzung kann ein Homopolymer sein. Das weitere Polymer kann ein C2 bis C4 Homopolymer sein. Beispielsweise kann das weitere Polymer Homo-Polyethen (HDPE oder LDPE) sein. Ebenso kann das weitere Polymer Homopropen sein. Das weitere Polymer kann Homo-alpha-Polybuten sein.

Wenn das weitere Polymer Ethen als Comonomer enthält, kann der Comonomeranteil von Ethen in dem weiteren Polymer mehr als 30 mol-%, bevorzugt mehr als 40 mol-%, bevorzugter mehr als 50 mol-%, bevorzugter mehr als 55 mol-%, bevorzugter mehr als 60 mol-%, bevorzugter mehr als 70 mol-%, bevorzugter mehr als 80 mol-%, bevorzugter mehr als 90 mol-%, betragen.

Das weitere Polymer als Copolymer kann ein Ethen-alpha-Octen-Copolymer sein, insbesondere ein Ethen-alpha-Octen-Blockcopolymer.

Der Comonomeranteil von Ethen in dem weiteren Polymer kann weniger als 90 mol-%, bevorzugt weniger als 80mol-%, bevorzugter weniger als 70 mol-%, bevorzugter weniger als 60 mol-%, bevorzugter weniger als 50 mol-%, bevorzugter weniger als 40 mol-%, bevorzugter weniger als 30 mol-%, bevorzugter weniger als 20 mol-%, bevorzugter weniger als 10 mol-%, betragen.

Das weitere Polymer als Copolymer kann ein alpha-Buten-Ethen-Copolymer sein, insbesondere ein alpha-Buten-Ethen-random-Copolymer.

Die Polymerzusammensetzung kann ein weiteres Cycloolefin-Polymer umfassen. Das weitere Cycloolefin-Polymer kann das weitere Polymer der Polymerzusammensetzung sein.

Die Polymerzusammensetzung kann also zumindest zwei verschiedene Cycloolefin-Polymere umfassen. Die zwei verschiedenen Cycloolefin-Polymere können sich durch zumindest eine chemische und/oder durch zumindest eine physikalische Eigenschaft unterscheiden.

Beispielsweise können sich unterschiedliche Cycloolefin-Polymere durch ihre Monomere unterscheiden. Wenn die Cycloolefin-Polymere Cycloolefin-Copolymere sind, können sich unterschiedliche Cycloolefin-Copolymere durch unterschiedliche Comonomere unterscheiden. Ebenso können sich unterschiedliche Cycloolefin-Copolymere durch unterschiedliche Comonomeranteile unterscheiden. Beispielsweise können unterschiedliche Cycloolefin-Copolymere aus den gleichen Comonomeren aufgebaut sein, jedoch kann zumindest eines der Comonomere in einem Cycloolefin-Copolymer einen anderen Comonomeranteil aufweisen als in einem weiteren Cycloolefin-Copolymer.

Das weiter Cycloolefin-Polymer kann jedes hierin offenbarte Cycloolefin-Polymer sein.

Das weitere Cycloolefin-Polymer kann zu höchstens 80 Gew.-%, bevorzugt höchstens 70 Gew.-%, bevorzugter höchstens 60 Gew.-%, bevorzugter höchstens 50 Gew.-%, bevorzugter höchstens 40 Gew.-%, bevorzugter höchstens 30 Gew.-%, in der Polymerzusammensetzung enthalten sein. Das weitere Cycloolefin-Polymer kann zu zumindest 1 Gew.-%, bevorzugt zumindest 3 Gew.-%, bevorzugter zumindest 5 Gew.-%, bevorzugter zumindest 10 Gew.-%, bevorzugter zumindest 15 Gew.-%, bevorzugter zumindest 20 Gew.-%, in der Polymerzusammensetzung enthalten sein.

Das weitere Cycloolefin-Polymer kann zwischen 1 Gew.-% und 80 Gew.-%, bevorzugt zwischen 1 Gew.-% und 50 Gew.-%, bevorzugter zwischen 3 Gew.-% und 50 Gew.-%, bevorzugter zwischen 3 Gew.-% und 40 Gew.-%, bevorzugter zwischen 5 Gew.-% und 40 Gew.-%, bevorzugter zwischen 10 Gew.-% und 35 Gew.-%, bevorzugter zwischen 15 Gew.-% und 35 Gew.-%, bevorzugter zwischen 20 Gew.-% und 30 Gew.-%, bevorzugter zwischen 22 Gew.-% und 26 Gew.-% in der Polymerzusammensetzung enthalten sein.

Die Polymerzusammensetzung kann weniger als 10 Gew.-% Polyvinylchlorid (PVC) enthalten. Bevorzugt enthält die Polymerzusammensetzung weniger als 2 Gew.-% PVC, bevorzugter ist die Polymerzusammensetzung frei von PVC (im Rahmen der am Anmeldetag analytischen Genauigkeit).

Die Polymerzusammensetzung kann zumindest 1 Gew.-% PVC enthalten. Bevorzugt enthält die Polymerzusammensetzung zumindest 2 Gew.-%, bevorzugter zumindest 5 Gew.-%, bevorzugter zumindest 10 Gew.-%, bevorzugter zumindest 20 Gew.-%, bevorzugter zumindest 30 Gew.-%, PVC. Das weitere Polymer der Polymerzusammensetzung kann PVC sein.

Die Polymerzusammensetzung kann keinen Sauerstoff-Scavenger umfassen. Die Polymerzusammensetzung kann frei von einem Sauerstoff-Scavenger sein. Insbesondere enthält die Polymerzusammensetzung kein Natriumsulfit bzw. ist frei von Natriumsulfit.

Die Polymerzusammensetzung kann kein SEBS (Styrol-Ethylen-Butylen-Styrol) umfassen. Die Polymerzusammensetzung kann frei von SEBS sein. Insbesondere enthält die Polymerzusammensetzung keine Styrol-haltige Komponente bzw. ist frei von einer Styrolhaltigen Komponente.

Die Polymerzusammensetzung kann zumindest 1 Gew.-% einer bei 20 °C und 1 bar flüssigen Komponente enthalten. Bevorzugt enthält die Polymerzusammensetzung zumindest 5 Gew.-%, bevorzugter zumindest 10 Gew.-%, bevorzugter zumindest 15 Gew.-%, bevorzugter zumindest 20 Gew.-%, einer bei 20 °C und 1 bar flüssigen Komponente.

Die bei 20 °C und 1 bar flüssige Komponente kann zwischen 1 Gew.-% und 60 Gew.-%, bevorzugt zwischen 1 Gew.-% und 45 Gew.-%, bevorzugter zwischen 1 Gew.-% und 30 Gew.-%, bevorzugter zwischen 5 Gew.-% und 30 Gew.-%, bevorzugter zwischen 5 Gew.-% und 15 Gew.-% oder zwischen 15 Gew.-% und 25 Gew.-% in der Polymerzusammensetzung enthalten sein.

Die flüssige Komponente kann das weitere Polymer der Polymerzusammensetzung sein. Alternativ kann die flüssige Komponente zusätzlich zu dem weiteren Polymer in der Polymerzusammensetzung enthalten sein.

Die flüssige Komponente kann ein Polyalphaolefin sein. Die flüssige Komponente kann eine kinematische Viskosität, bestimmt nach ASTM D445 / ISO 3104, von zumindest 4 cSt, bei einer Temperatur von 100 °C aufweisen. Alternativ oder zusätzlich kann die flüssige Komponente einem Tropfpunkt, bestimmt nach ASTM 5950, von höchstens -10 °C aufweisen.

Die kinematische Viskosität der flüssigen Komponente kann bei einer Temperatur von 100 °C, bestimmt nach ASTM D445 / ISO 3104, zwischen 4 cSt und 1500 cSt, bevorzugt zwischen 50 cSt und 1000 cSt, mehr bevorzugt zwischen 120 cSt und 1000 cSt, noch bevorzugter zwischen 250 cSt und 1000 cSt, betragen.

Die kinematische Viskosität der flüssigen Komponente kann bei einer Temperatur von 100 °C kann auch zwischen 2 cSt und 10 cSt, zwischen 55 cSt und 75 cSt, zwischen 140 cSt und 160 cSt, zwischen 280 cSt und 320 cSt oder zwischen 900 cSt und 1100 cSt liegen.

Der Tropfpunkt der flüssigen Komponente kann höchstens -20 °C oder bei höchstens 30 °C betragen.

Die flüssige Komponente kann eine Dichte, bestimmt nach ASTM D4052, von bis zu 0,860 g cm⁻³, insbesondere zwischen 0,825 g cm⁻³ und 0,855 g cm⁻³, aufweisen. Auch kann die Dichte der flüssigen Komponente zwischen 0,840 g cm⁻³ und 0,855 g cm⁻³ liegen.

Die flüssige Komponente kann ein mittleres Molekulargewicht Mw, bestimmt nach DIN 55672-1, von mindestens 440 Da, bevorzugt zwischen 440 Da und 12000 Da, besonders bevorzugt zwischen 1000 Da und 10000 Da, noch mehr bevorzugt zwischen 3000 Da und 10000 Da, aufweisen.

Die flüssige Komponente kann eine Metallocen-Komponente sein. Die flüssige Komponente kann durch die Anwendung eines Metallocen-Katalysators hergestellt worden sein.

Die flüssige Komponente kann ein Ziegler-Natta-Komponente sein. Die flüssige Komponente kann durch die Anwendung eines Ziegler-Natta-Katalysators hergestellt worden sein.

Die flüssige Komponente kann ein Homopolymer oder ein Copolymer sein.

Die flüssige Komponente kann ein Homopolymer eines C3 bis C22 alpha-Olefins sein. Zur Herstellung der flüssigen Komponente als Homopolymer werden also alpha-Olefine der Länge C3 bis C22 als Monomere eingesetzt. Bevorzugt werden für die flüssige Komponente als Homopolymer C6 bis C14 alpha-Olefine oder C8 bis C10 alpha-Olefine als Monomere eingesetzt.

Die flüssige Komponente kann ein alpha-Octen-Homopolymer oder ein alpha-Decen-Homopolymer sein, bevorzugt ein alpha-Decen-Homopolymer.

Als Copolymer ist die flüssige Komponente aus zumindest zwei verschiedenartigen alpha-Olefinen der Länge C3 bis C22 als Comonomere aufgebaut. Spezifisch kommen zwei verschiedenartige Alphaolefine der Länge C6 bis C14 oder C8 bis C10 als Comonomere zum Einsatz.

Die flüssige Komponente kann ein Bipolymer sein.

Die flüssige Komponente kann ein synthetisches Fluid (bei 23 °C und 1 bar) sein, insbesondere ist die flüssige Komponente ein vollständig synthetisches Fluid (bei 23 °C und 1 bar).

Die flüssige Komponente kann hydriert sein, insbesondere ist die flüssige Komponente vollständig hydriert.

Die flüssige Komponente kann eine Mischung verschiedenartiger flüssiger Komponenten sein. Beispielsweise kann die flüssige Komponente eine Mischung von zumindest zwei flüssigen Komponenten sein, die sich in ihrer kinematischen Viskosität und/oder in ihren (Co-)Monomeren unterscheiden. Hierzu können zumindest zwei der hierin offenbarten flüssigen Komponenten als Mischung vorliegen.

Die flüssige Komponente kann ein Polyalphaolefin sein oder umfassen. Die flüssige Komponente kann eine Mischung verschiedener Polyalphaolefine sein.

Die Polymerzusammensetzung kann höchstens eine polymere Komponente oder genau eine polymere Komponente enthalten. Die höchstens eine polymere Komponente kann das Cycloolefin-Polymer sein. Mit anderen Worten, die Polymerzusammensetzung kann zusätzlich zu dem Cycloolefin-Polymer kein weiteres Polymer enthalten. In der Polymerzusammensetzung kann also genau ein Polymer (genau ein Polymertyp) enthalten sein. Zusätzlich kann die Polymerzusammensetzung nicht-polymere Komponenten enthalten. Die nicht-polymeren Komponenten können Additive, nicht-polymere flüssige Komponenten, usw. sein.

Insbesondere ist das Cycloolefin-Polymer zu zumindest 80 Gew.-%, bevorzugt zumindest 85 Gew.-%, bevorzugter zumindest 88 Gew.-%, bevorzugter zumindest 90 Gew.-%, bevorzugter zumindest 92 Gew.-%, bevorzugter zumindest 94 Gew.-%, bevorzugter zumindest 95 Gew.-%, in der Polymerzusammensetzung enthalten.

Das Cycloolefin-Copolymer kann zu höchstens 99 Gew.-% in der Polymerzusammensetzung enthalten sein. Bevorzugt ist das Cycloolefin-Copolymer zu höchstens 98 Gew.-%, bevorzugter höchstens 97 Gew.-%, bevorzugter höchstens 96 Gew.-%, in der Polymerzusammensetzung enthalten.

Das Cycloolefin-Copolymer kann zwischen 80 Gew.-% und 100 Gew.-%, bevorzugt zwischen 80 Gew.-% und 99 Gew.-%, bevorzugter zwischen 85 Gew.-% und 99 Gew.-%, bevorzugter zwischen 85 Gew.-% und 98 Gew.-%, bevorzugter zwischen 90 Gew.-% und 98 Gew.-%, bevorzugter zwischen 92 Gew.-% und 98 Gew.-%, bevorzugter zwischen 94 Gew.-% und 98 Gew.-%, bevorzugter zwischen 95 Gew.-% und 97 Gew.-%, in der Polymerzusammensetzung enthalten sein.

Die Polymerzusammensetzung kann weniger als 10 Gew.-% einer bei 20 °C und 1 bar flüssigen Komponente enthalten. Insbesondere enthält die Polymerzusammensetzung weniger als 5 Gew.-%, bevorzugter weniger als 2 Gew.-%, einer bei 20 °C und 1 bar flüssigen Komponente. Am meisten bevorzugt ist die Polymerzusammensetzung frei von einer Komponente, die bei 20 °C und 1 bar flüssig ist (im Rahmen der am Anmeldetag analytischen Genauigkeit).

Die Polymerzusammensetzung kann weniger als 10 Gew.-% Weißöl enthalten. Insbesondere enthält die Polymerzusammensetzung weniger als 5 Gew.-%, bevorzugter weniger als 2 Gew.-%, Weißöl. Am meisten bevorzugt ist die Polymerzusammensetzung frei von Weißöl (im Rahmen der am Anmeldetag analytischen Genauigkeit).

Die Polymerzusammensetzung kann eine flüssige Komponente, beispielsweise Polyalphaolefin (wie oben beschrieben), umfassen und/oder wenig oder kein Weißöl umfassen.

Die Polymerzusammensetzung kann bis zu 15 Gew.-%, bevorzugt bis zu 8 Gew.-%, besonders bevorzugt bis zu 6 Gew.-%, am meisten bevorzugt bis zu 5 Gew.-%, Additive umfassen.

Additive in der Polymerzusammensetzung können ausgewählt sein aus der Gruppe bestehend aus: Pigmente, Nukleierungsmittel, Aufheller, Stabilisatoren, Tenside, Gleitmittel, Antioxidantien und Kombinationen hiervon.

Die Polymerzusammensetzung kann eine Shore A Härte, bestimmt nach DIN ISO 7619 bei einer Temperatur von 23 °C und einer Haltezeit von 15 s, von zumindest 40 aufweisen. Bevorzugt weist die Polymerzusammensetzung eine Shore A Härte von zumindest 50, bevorzugter zumindest 60, bevorzugter zumindest 70, bevorzugter zumindest 80, auf.

Die Shore A Härte der Polymerzusammensetzung kann zwischen 40 und 100, bevorzugt zwischen 40 und 95, bevorzugter zwischen 50 und 95, bevorzugter zwischen 60 und 95, bevorzugter zwischen 65 und 95, betragen.

Die Polymerzusammensetzung kann eine Shore D Härte, bestimmt nach DIN ISO 7619 bei einer Temperatur von 23 °C und einer Haltezeit von 15 s, von weniger als 80 aufweisen. Insbesondere weist die Polymerzusammensetzung eine Shore D Härte von weniger als 70, bevorzugter weniger als 60, bevorzugter weniger als 50, auf.

Die Polymerzusammensetzung kann einen Druckverformungsrest, bestimmt nach ASTM D 395, 70 °C, 22 h, von zumindest 50 % aufweisen. Insbesondere weist die Polymerzusammensetzung einen Druckverformungsrest von zumindest 60 %, bevorzugter zumindest 70 %, bevorzugter zumindest 80 %, bevorzugter zumindest 90 %, bevorzugter zumindest 100 %, bevorzugter zumindest 110 % auf.

Die Polymerzusammensetzung kann einen Druckverformungsrest von höchstens 150 %, bevorzugt von höchstens 140 %, bevorzugter von höchstens 130 %, bevorzugter von höchstens 120 %, bevorzugter von höchstens 110 %, aufweisen.

Die Polymerzusammensetzung kann einen Druckverformungsrest zwischen 50 % und 150 %, bevorzugt zwischen 60 % und 140 %, bevorzugter zwischen 70 % und 130 %, bevorzugter zwischen 80 % und 130 %, bevorzugter zwischen 90 % und 130 %, bevorzugter zwischen 90 % und 120 %, aufweisen.

Die Polymerzusammensetzung kann einen Druckverformungsrest von höchstens 50 %, bevorzugt von höchstens 40 %, bevorzugter von höchstens 30 %, bevorzugter von höchstens 25 %, aufweisen.

Die Polymerzusammensetzung kann einen Druckverformungsrest zwischen 5 % und 50 %, bevorzugt zwischen 5 % und 40 %, bevorzugter zwischen 10 % und 40 %, bevorzugter zwischen 10 % und 30 %, bevorzugter zwischen 15 % und 25 %, aufweisen.

Die Polymerzusammensetzung kann eine Gesamtmigration, bestimmt nach DIN-EN 1186-14, von maximal 5,5 mg cm⁻² aufweisen. Bevorzugt beträgt die Gesamtmigration maximal 3,5 mg cm⁻², bevorzugter maximal 2,5 mg cm⁻², bevorzugter maximal 2,0 mg cm⁻², bevorzugter maximal 1,5 mg cm⁻², bevorzugter maximal 1,0 mg cm⁻², bevorzugter maximal 0,7 mg cm⁻², bevorzugter maximal 0,5 mg cm⁻².

Die Polymerzusammensetzung kann eine Sauerstoffdurchlässigkeitsrate von weniger als 2700 cm³ m⁻² d⁻¹ bar⁻¹, bevorzugt von weniger als 2500 cm³ m⁻² d⁻¹ bar⁻¹, bevorzugter von weniger als 2300 cm³ m⁻² d⁻¹ bar⁻¹, bevorzugter von weniger als 2000 cm³ m⁻² d⁻¹ bar⁻¹, bevorzugter von weniger als 1700 cm³ m⁻² d⁻¹ bar⁻¹, bevorzugter von weniger als 1400 cm³ m⁻² d⁻¹ bar⁻¹, bevorzugter von weniger als 1100 cm³ m⁻² d⁻¹ bar⁻¹, bevorzugter von weniger als 800 cm³ m⁻² d⁻¹ bar⁻¹, bevorzugter von weniger als 700 cm³ m⁻² d⁻¹ bar⁻¹, bevorzugter von weniger als 600 cm³ m⁻² d⁻¹ bar⁻¹, bevorzugter von weniger als 500 cm³ m⁻² d⁻¹ bar⁻¹, bevorzugter von weniger als 400 cm³ m⁻² d⁻¹ bar⁻¹, bevorzugter von weniger als 300 cm³ m⁻² d⁻¹ bar⁻¹, bevorzugter von weniger als 200 cm³ m⁻² d⁻¹ bar⁻¹, bevorzugter von weniger als 150 cm³ m⁻² d⁻¹ bar⁻¹, aufweisen.

Die Polymerzusammensetzung kann eine Schmelztemperatur Tm, bestimmt durch eine zweite Aufheizkurve einer DSC-Messung bei einer Heizrate von 10°C/min, von zumindest 50 °C aufweisen. Bevorzugt beträgt die SchmelztemperaturTm der Polymerzusammensetzung zumindest 60 °C, bevorzugter zumindest 70 °C.

Die Polymerzusammensetzung kann eine Schmelztemperatur Tm von höchstens 150 °C aufweisen. Bevorzugt beträgt die Schmelztemperatur Tm der Polymerzusammensetzung höchsten 120 °C, bevorzugter höchstens 100 °C.

Die SchmelztemperaturTm der Polymerzusammensetzung kann zwischen 50 °C und 150 °C liegen. Bevorzugt liegt die Schmelztemperatur Tm der Polymerzusammensetzung zwischen 60 °C und 140 °C, bevorzugter zwischen 70 °C und 130 °C, bevorzugter zwischen 70 °C und 120 °C, bevorzugter zwischen 80 °C und 115 °C.

Die SchmelztemperaturTm der Polymerzusammensetzung kann zwischen 80 °C und 90 °C oder zwischen 105 °C und 115 °C liegen.

Besonders bevorzugt weist die Polymerzusammensetzung keine Schmelztemperatur auf (zweite Aufheizkurve einer DSC-Messung bei einer Heizrate von 10°C/min). Mit anderen Worten, eine Schmelztemperatur der Polymerzusammensetzung kann bei einer zweiten Aufheizkurve einer DSC-Messung bei einer Heizrate von 10°C/min nicht messbar oder nicht bestimmbar sein.

Der Gefäßverschluss kann einen Träger und das Dichtungselement umfassen. Der Träger kann einen flächigen Abschnitt und einen Schürzenabschnitt umfassen. Speziell kann der Träger Metall, Kunststoff oder Metall und Kunststoff umfassen. Insbesondere ist der Hauptbestandteil des Trägers Metall oder Kunststoff, insbesondere Metall.

Der Gefäßverschluss kann ein Schraubverschluss sein. Bevorzugt ist der Gefäßverschluss ein Nockendrehverschluss. Der Gefäßverschluss kann auch ein Press-on Twist-off-Gefäßverschluss oder ein Composite-Verschluss sein.

Ein offenbarter Gefäßverschluss kann ein Gefäß verschließen. Das Gefäß umfasst eine Gefäßmündung und eine verschließbare Öffnung am Ende der Gefäßmündung. Diese Öffnung kann einer der offenbarten Gefäßverschlüsse verschließen.

Das Gefäß kann ein Glasgefäß, Kunststoffgefäß oder Metallgefäß sein. Insbesondere ist das Gefäß ein Glasgefäß.

Der Gefäßverschluss, der die Öffnung des Gefäßes verschließt, kann einen Träger und das Dichtungselement umfassen. Der Träger kann eine untere Seite aufweisen und die Gefäßmündung ein oberes Ende aufweisen. Das Dichtungselement des Gefäßverschlusses ist typischerweise zwischen die Gefäßmündung und dem Träger des Gefäßverschlusses eingeklemmt, so dass das Dichtungselement sowohl am oberen Ende der Gefäßmündung als auch an der unteren Seite des Trägers anliegt. Speziell ist die Höhe des Dichtungselements zwischen dem oberen Ende der Gefäßmündung und der unteren Seite des Trägers maximal 1,0 mm. Bevorzugt ist diese Höhe maximal 0,8 mm und besonders bevorzugt maximal 0,7 mm. Die Höhe kann in axialer Richtung des Gefäßes bestimmt werden.

Analog dazu kann die Höhe des Dichtungselements zwischen dem oberen Ende der Gefäßmündung und der unteren Seite des Trägers mindestens 0,2 mm betragen. Speziell beträgt die Höhe mindestens 0,4 mm und besonders bevorzugt mindestens 0,5 mm. Die Messung der Höhe des Dichtungselements kann in axialer Richtung des Gefäßes erfolgen.

Besonders bevorzugt liegt die Höhe des Dichtungselements zwischen dem oberen Ende der Gefäßmündung und der unteren Seite des Trägers zwischen 0,3 mm und 0,9 mm.

Beträgt beispielsweise die Höhe des Dichtungselements vor dem Aufbringen des Gefäßverschlusses auf ein Gefäß 1,2 mm, sorgt ein Eindruck des oberen Endes der Gefäßmündung in das Dichtungselement (Höhe zwischen oberen Ende der Gefäßmündung und unterer Seite des Trägers von maximal 1,0 mm) ohne dass das Dichtungselement durchschnitten wird (Höhe des Dichtungselements zwischen oberen Ende der Gefäßmündung und unterer Seite des Trägers von mindestens 0,2 mm) für eine hohe Dichtigkeit des mit dem Gefäßverschlusses verschlossenen Gefäßes.

Bevorzugt herrscht in dem geschlossenen Gefäß ein Vakuum. Der absolute Druck in dem geschlossenen Gefäß kann maximal 200 hPa betragen. Speziell beträgt der absolute Druck in dem verschlossenen Gefäß maximal 100 hPa.

Das mit dem Gefäßverschluss verschlossene Gefäß kann ein Sicherheitsmaß von maximal 10 mm aufweisen, speziell ist das Sicherheitsmaß maximal 8 mm. Bevorzugt beträgt das Sicherheitsmaß maximal 6 mm. Am meisten bevorzugt beträgt das Sicherheitsmaß maximal 4 mm.

Zur Bestimmung des Sicherheitsmaßes wird ein mit einem Nockendrehverschluss verschlossenes Gefäß bei Raumtemperatur (23°C) für einen Zeitraum von 30 Minuten gelagert. Die relative Position des Gefäßverschlusses zu dem Gefäß wird durch Anbringen einer Markierung auf der Gefäßverschlussschürze und der Gefäßwand so markiert, dass die umfängliche Distanz zwischen der Markierung auf der Gefäßverschlussschürze und der Gefäßwand null ist. Die Markierungen liegen auf einer Geraden, die parallel zur Längsachse des Gefäßes ist. Anschließend wird der Gefäßverschluss vollständig von dem Gefäß durch Abschrauben entfernt. Nachfolgend wird der Gefäßverschluss auf das Gefäß aufgelegt und angedreht, bis ein leichter Widerstand spürbar ist. Der Gefäßverschluss wird also fingerfest angedreht. Anschließend wird die umfängliche Distanz zwischen der Markierung auf der Gefäßverschlussschürze und der Markierung auf der Gefäßwand gemessen. Die gemessene Distanz entspricht dem Sicherheitsmaß ausgedrückt in mm.

Durch die zumindest abschnittsweise starke Steigung der Gewindegänge von Gefäßen und Nockendrehverschlüssen, ist die Präzision der Messung des Sicherheitsmaßes hoch, da der Punkt, an dem ein leichter Widerstand während des Andrehens des Gefäßverschlusses spürbar ist (fingerfest), präzise bestimmbar ist. Typischerweise liegt die Präzision der Messung des Sicherheitsmaßes an verschlossenen Gefäßen, die unter gleichen Bedingungen verschlossen wurden, durch verschiedene Personen bei etwa ±1 mm.

Durch ein passendes Sicherheitsmaß wird sichergestellt, dass das Dichtungselement eine elastische Kraft auf zumindest das obere Ende der Gefäßmündung ausübt, wenn das Gefäß mit dem Gefäßverschluss verschlossen ist. Dadurch ergibt sich eine hohe Dichtigkeit des Innenraums des verschlossenen Gefäßes.

Die Öffnung des Gefäßes kann einen Durchmesser von mindestens 20 mm aufweisen. Insbesondere ist der Durchmesser der Öffnung des Gefäßes maximal 120 mm.

Das Gefäß kann ein Glasgefäß, Kunststoffgefäß oder Metallgefäß sein.

Der Gefäßverschluss kann, bevor die Öffnung des Gefäßes mit dem Gefäßverschluss verschlossen wird, bei einer Temperatur von mindestens 90 °C behandelt werden. Eine solche Behandlung kann beispielsweise mit Wasserdampf durchgeführt werden.

In dem Gefäß kann ein Kopfraum gebildet werden, nachdem das Gefäß mit dem Lebensmittel befüllt wurde. Der Kopfraum in dem Gefäß ist nach der Befüllung der Abschnitt des Gefäßinhalts, in dem kein Lebensmittel vorhanden ist. Dem Kopfraum kann Dampf zugeführt werden, bevor der Gefäßverschluss auf das Gefäß aufgebracht wird und damit die Öffnung des Gefäßes verschlossen wird. Insbesondere kann der Dampf Wasserdampf sein.

Der absolute Druck in dem verschlossenen und befüllten Gefäß kann maximal 200 hPa betragen. Speziell kann der Druck in dem verschlossenen und befüllten Gefäß maximal 100 hPa betragen.

Zur Bildung eines Eindrucks der Gefäßmündung in das Dichtungselement kann das Dichtungselement während des Verschließens der Öffnung des Gefäßes mit dem Gefäßverschluss und/oder einer thermischen Behandlung des verschlossenen und befüllten Gefäßes mindestens 0,2 mm in axialer Richtung des Gefäßes verformt werden. Bevorzugt beträgt diese Verformung des Dichtungselements mindestens 0,4 mm. Speziell beträgt die Verformung mindestens 0,5 mm.

Analog dazu kann das Dichtungselement zur Bildung eines Eindrucks der Gefäßmündung in das Dichtungselement während des Verschließens der Öffnung des Gefäßes mit dem Gefäßverschluss und/oder einer thermischen Behandlung des verschlossenen und befüllten Gefäßes um maximal 1,0 mm verformt werden. Insbesondere beträgt die Verformung maximal 0,8 mm. Bevorzugter beträgt die Verformung maximal 0,7 mm. Dies jeweils in axialer Richtung des Gefäßes.

Besonders bevorzugt beträgt die Verformung des Dichtungselements zwischen 0,3 mm und 0,9 mm.

Das Lebensmittel kann aseptisch in das Gefäß eingefüllt werden.

Das Lebensmittel kann auch mit einer Temperatur von maximal 10 °C in das Gefäß gefüllt werden.

Das Lebensmittel kann auch mit einer Temperatur zwischen 10 °C und 70 °C in das Gefäß gefüllt werden.

Ebenso kann das Lebensmittel mit einer Temperatur zwischen 70 °C und 98 °C in das Gefäß gefüllt werden.

Innerhalb des Verfahrens kann das verschlossene und befüllte Gefäß thermisch behandelt werden. Dabei liegt die Temperatur der thermischen Behandlung oberhalb der Temperatur des (festen und/oder flüssigen) Lebensmittels während der Befüllung des Gefäßes damit.

Die thermische Behandlung kann bei einer Temperatur von mindestens 60°C erfolgen.

Auch kann die thermische Behandlung bei einer Temperatur von maximal 135°C erfolgen (zwischen 60 °C und 135 °C). Insbesondere erfolgt die thermische Behandlung bei einer Temperatur von bis zu 135°C (zwischen 60 °C und 135 °C) bei einem absoluten Umgebungsdruck von maximal 4,0 bar, bevorzugt bei einem absoluten Umgebungsdruck zwischen 1,0 bar und 4,0 bar.

Bevorzugt ist der Druck in dem verschlossenen Gefäß während einer thermischen Behandlung geringer als der Druck außerhalb des verschlossenen Gefäßes.

Die Ausführungsformen der Offenbarung sind anhand von Beispielen dargestellt, jedoch nicht auf eine Weise, in der Beschränkungen aus den Figuren in die Patentansprüche übertragen oder hineingelesen werden. Gleiche Bezugszeichen in den Figuren geben gleiche Elemente an.
- Figur 1: zeigt eine Seitenansicht eines Nockendrehverschlusses 1 mit einem ringförmigen Dichtungselement 3, teilweise als Schnitt;
- Figur 2: zeigt eine Seitenansicht des Nockendrehverschlusses 1 mit dem Dichtungselement 3 auf einem Gefäß 5, teilweise als Schnitt;
- Figur 3: zeigt den Nockendrehverschluss 1 mit dem Dichtungselement 3 in einer Untersicht;
- Figur 4: zeigt eine isometrische Ansicht eines Composite-Verschlusses 61 (Combi-Twist);
- Figur 5: zeigt teilweise einen axialen Schnitt des Composite-Verschlusses 61 (Combi-Twist) von Figur 4;
- Figur 6: zeigt eine Seitenansicht eines Press-on Twist-off-Verschlusses 21 (PT-Verschluss) mit einem Dichtungselement 23, teilweise als Schnitt;
- Figur 7: zeigt eine Seitenansicht des PT-Verschlusses 21 mit dem Dichtungselement 23 auf einem Gefäß 25, teilweise als Schnitt;
- Figur 8: zeigt eine Draufsicht des PT-Verschlusses 21;
- Figur 9: zeigt eine Seitenansicht eines Composite-Verschlusses 41 (Band-Guard) mit einem Dichtungselement 43, teilweise als Schnitt;
- Figur 10: zeigt eine Seitenansicht des Composite-Verschlusses 41 (Band-Guard) mit dem Dichtungselement 43 auf einem Gefäß 45, teilweise als Schnitt;
- Figur 11: zeigt eine Draufsicht des Composite-Verschlusses 41 (Band-Guard);
- Figur 12: zeigt einen vergrößerten Ausschnitt des Nockendrehverschlusses von Figur 2.

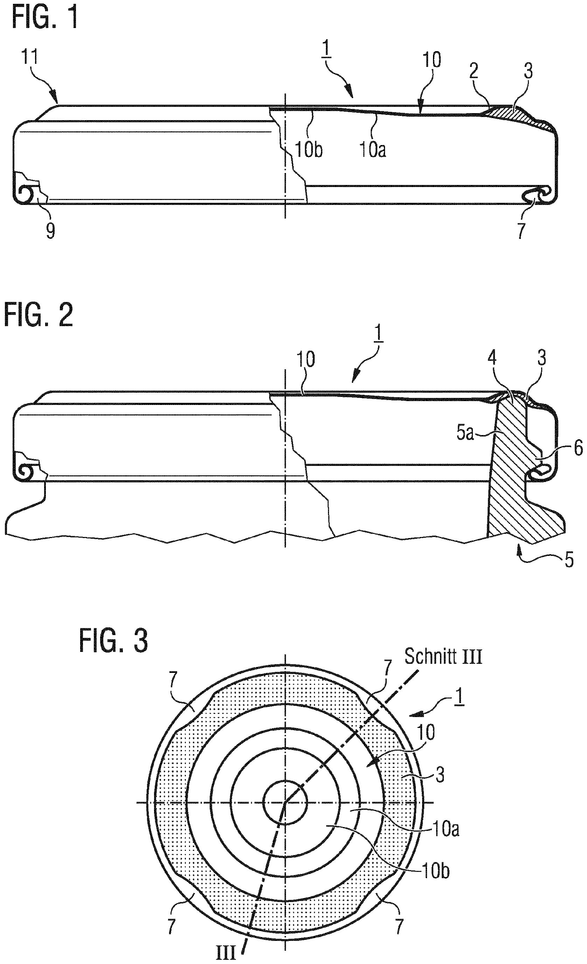

Die Figuren 1 und 3 zeigen einen Nockendrehverschluss 1. Der Nockendrehverschluss 1 kann einen metallischen Träger 11 umfassen und kann ein Dichtungselement 3 umfassen. In der Darstellung der Figur 2 ist der Nockendrehverschluss 1 auf ein Gefäß 5 aufgebracht. An dem unteren Ende des Nockendrehverschlusses 1 kann eine Einrollung 9 ausgebildet sein. Mehrere Nocken 7 können umfänglich verteilt aus der randseitigen Rollung, insbesondere Einrollung 9 ausgebildet sein. Nocken 7 können durch eine axiale Verformung der Einrollung 9 geformt sein und können sich radial weiter zur Mitte des Nockendrehverschlusses 1 erstrecken als die Einrollung 9. Der in den Figuren 1 bis 3 abgebildete Nockendrehverschluss 1 umfasst vier Nocken 7, die umfänglich gleichmäßig verteilt ausgebildet sein können. Die Schnitte, die in den Figuren 1 und 2 teilweise abgebildet sind, entsprechen dem Schnitt III-III in Figur 3.

Allgemein kann der Gefäßverschluss zumindest drei Nocken, bevorzugt zumindest vier Nocken, bevorzugter zumindest sechs Nocken, aufweisen. Der Gefäßverschluss kann drei bis sechs Nocken aufweisen.

Nahe dem radial äußeren Endabschnitt des Nockendrehverschlusses 1 kann ein Kanal 2 in dem oberen Abschnitt 10 des Trägers 11 ausgebildet sein. Das Dichtungselement 3 kann zumindest teilweise in dem Kanal 2 angeordnet sein. In dieser Ausführungsform ist das Dichtungselement 3 ringförmig ausgestaltet, in anderen Ausführungsformen kann das Dichtungselement 3 scheibenförmig ausgestaltet sein, dies insbesondere wenn der Durchmesser des Nockendrehverschlusses klein (z.B. maximal 30 mm) ist.

Zur Haftvermittlung zwischen dem metallischen Träger 11 und dem Dichtungselement 3 kann ein Haftlack auf die Seite des metallischen Trägers 11 aufgebracht sein, die mit dem Dichtungselement 3 in Kontakt steht.

In Figur 2 ist der Nockendrehverschluss 1 auf ein Gefäß 5 aufgebracht. Das Gefäß 5 kann eine Gefäßmündung 5a als oberen Abschnitt des Gefäßes 5 umfassen. Die Gefäßmündung kann ein Gewinde 6 umfassen und kann ein oberes Ende 4 der Gefäßmündung 5a umfassen. Das Gewinde 6 kann umlaufend im Bereich der Gefäßmündung 5a ausgebildet sein und kann sich umlaufend aufwärts oder abwärts (in Abhängigkeit des Blickwinkels) erstrecken. Zum Aufbringen des Nockendrehverschlusses 1 auf ein Gefäß 5 können Nocken 7 mit Abschnitten des Gewindes 6 in Kontakt gebracht werden und der Nockendrehverschluss 1 kann im Uhrzeigersinn relativ zum Gefäß 5 gedreht werden. Durch die Ausgestaltung des Gewindes 6 und die Interaktion der Nocken 7 mit dem Gewinde 6 kann sich das obere Ende 4 der Gefäßmündung 5a in Richtung des Dichtungselements 3 während der Drehbewegung des Nockendrehverschlusses 1 relativ zu dem Gefäß 5 bewegen. Durch eine weitere Drehbewegung des Nockendrehverschlusses 1 kann das obere Ende 4 der Gefäßmündung 5a in das Dichtungselement 3 eindrücken und kann dieses verformen, sodass ein Abschnitt des oberen Endes 4 der Gefäßmündung 5a von dem Dichtungselement 3 bedeckt sein kann, wodurch das Gefäß 5 dicht verschlossen sein kann. Ein dichter Verschluss des Gefäßes 5 ist insbesondere notwendig, um einem erhöhten Druck während einer thermischen Behandlung des verschlossenen Gefäßes 5 bei Temperaturen oberhalb von 70 °C, 90 °C oder sogar oberhalb von 120 °C Stand zu halten.

Der Nockendrehverschluss 1, wie in den Figuren 1 bis 3 abgebildet, kann ein Sicherheitselement, bevorzugt einen (flächigen) Safety Button 10b umfassen, der in dem oberen Abschnitt 10 des Trägers 11 ausgebildet ist. Der Button 10b ist optional. Aufgrund der Steigung 10a in dem oberen Abschnitt 10 des Trägers 11 kann der Button 10b in Richtung der Mitte des Gefäßes klappen, wenn ein ausreichend großer Unterdruck in dem Gefäß vorliegt. Ein solches Vakuum kann durch das Einbringen von Wasserdampf in das Gefäß vor dem Verschließen des Gefäßes mit dem Verschluss erzeugt werden.

Öffnet ein Verbraucher das Gefäß, indem der Gefäßverschluss entfernt wird, steigt der Druck in dem Gefäß auf Umgebungsdruck und der Button 10b klappt von der Mitte des Gefäßes weg. Das Umklappen des Buttons 10b wird von einem charakteristischen Geräusch begleitet, durch das ein Verbraucher erkennen kann, dass vor dem Öffnen des Gefäßes ein Vakuum in dem Gefäß geherrscht hat.

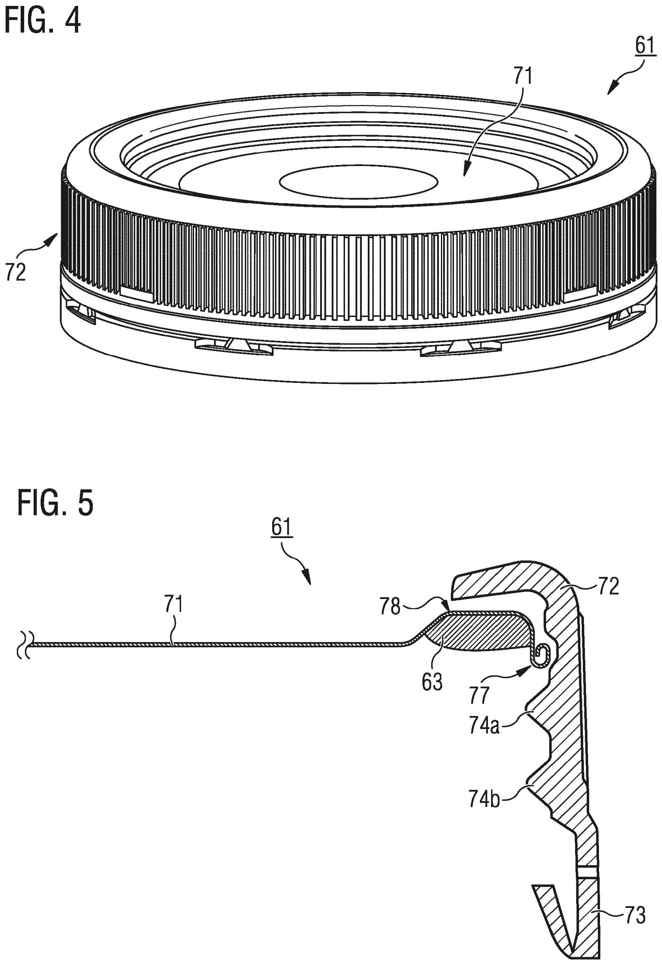

Die Figuren 4 und 5 zeigen einen Composite-Verschluss 61 (Combi-Twist), der analog zu dem beschriebenen Nockendrehverschluss 1 durch eine Drehbewegung auf ein Gefäß aufgebracht werden kann und durch eine Drehbewegung von dem Gefäß entfernt werden kann.

Der Composite-Verschluss 61 kann einen Träger mit einem oberen metallischen Abschnitt 71 umfassen und kann einen Kunststoff-Abschnitt 72, der L-förmig geformt ist, umfassen. Nahe dem radialen Ende des metallischen Abschnitts 71 des Trägers kann ein Kanal 78 geformt sein und eine Rollung 77 kann am radialen Ende des metallischen Abschnitts 71 ausgebildet sein. Ein Dichtungselement kann zumindest teilweise in dem Kanal 78 angeordnet sein.

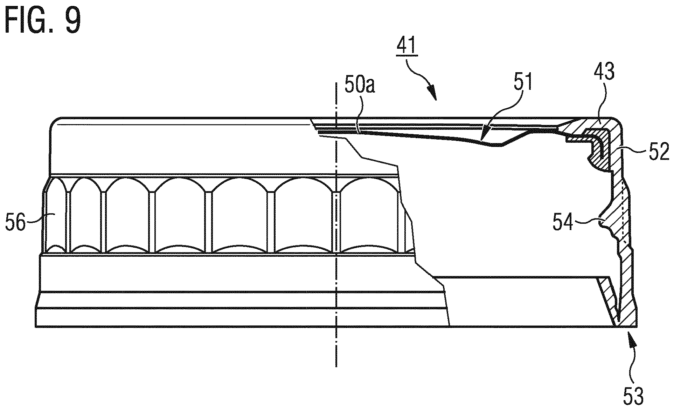

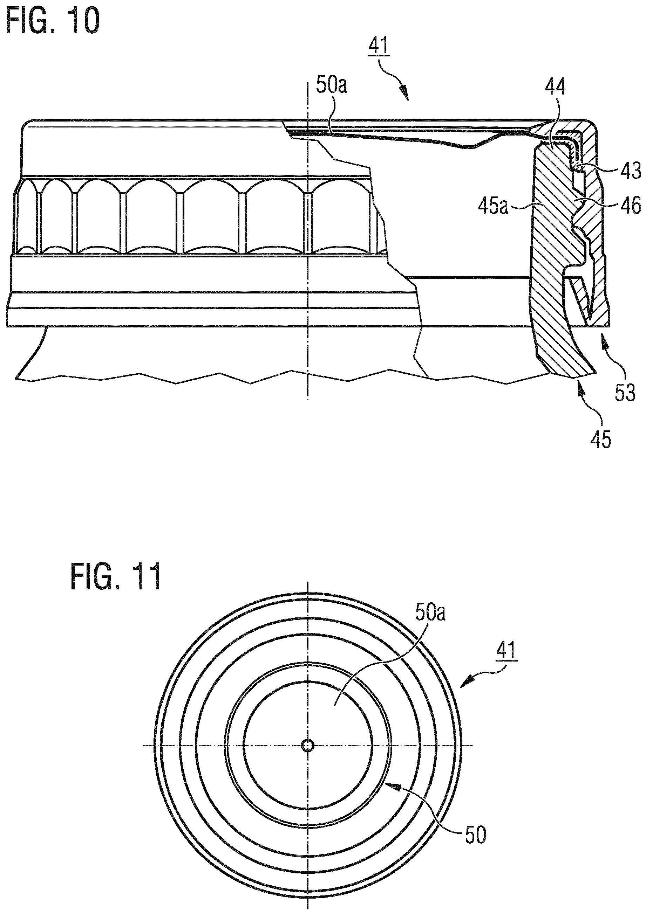

Mehrere, auf der Innenseite des Kunststoff-Abschnitts 72 gebildete Gewindeelemente 74a, 74b können mit einem Gegengewinde im Bereich der Mündung eines Gefäßes (nicht dargestellt), auf das der Composite-Verschluss 61 aufgebracht werden soll, kontaktieren oder darin eingreifen. Der Kunststoff-Abschnitt 72 des Composite-Verschlusses 61 kann eine Originalitätssicherung 73 umfassen, die ähnlich der Originalitätssicherung wie in den Figuren 9 bis 11 ausgestaltet ist und mit Blick auf die Figuren 9 bis 11 näher beschrieben wird.

Wird der Composite-Verschluss 61 auf ein Gefäß durch eine Drehbewegung aufgeschraubt, ergibt sich eine analoge Interaktion der Gefäßmündung des Gefäßes mit dem Dichtungselement des Composite-Verschlusses 61 wie anhand des Nockendrehverschlusses 1 beschrieben.

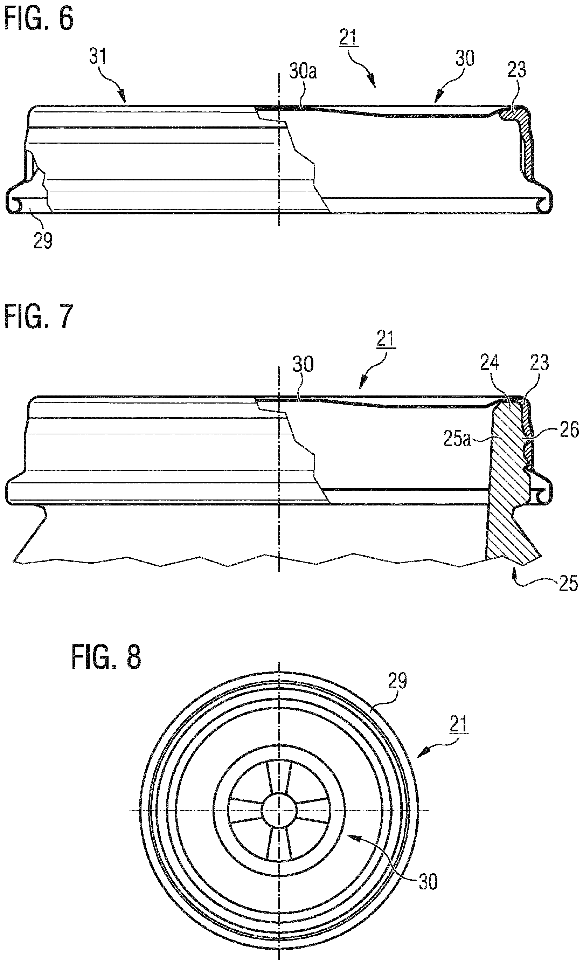

In den Figuren 6 bis 8 ist ein Press-on Twist-Off-Verschluss 21 (PT-Verschluss) abgebildet. Der PT-Verschluss 21 kann einen metallischen Träger 31 mit einer Einrollung 29 am unteren Ende des Trägers 31 umfassen. Der PT-Verschluss 21 kann einen Button 30a in dem oberen Abschnitt 30 des Trägers 31 umfassen. Der Button 30a ist optional.

Ein Dichtungselement 23 kann sowohl im Bereich des oberen Abschnitts 30 des Trägers 31 als auch in erheblichem Umfang (zumindest 10 %, zumindest 20 %, zumindest 30 %, zumindest 40 %, zumindest 50 % oder zumindest 60 % des Gesamtvolumens des Dichtungselements), auf der Schürze des Trägers, die sich ausgehend von dem oberen Abschnitt 30 des Trägers 31 nach unten erstreckt, ausgebildet sein. Der PT-Verschluss 21 kann im Gegensatz zu dem Nockendrehverschluss 1 und dem Composite-Verschluss 61 bei einem Aufbringen auf ein Gefäß 25, auf die Gefäßmündung 25a aufgepresst werden. Während des Aufpressens auf die Gefäßmündung 25a kann das Dichtungselement 23 ausreichend weich sein, um Gewindeelemente 26 der Gefäßmündung 25a elastisch zu umschließen. Typischerweise wird hierfür das Dichtungselement 23 vor dem Aufbringen des PT-Verschlusses 21 auf ein Gefäß 5 mit Wasserdampf behandelt, um die nötige Weichheit des Dichtungselements 23 zu verursachen. Nach Abkühlung des Dichtungselements 23 kann ein Gegengewinde in Form eines Negativs der Gewindeelemente 26 der Gefäßmündung in dem Dichtungselement 23 gebildet sein.

Ein oberes Ende 24 der Gefäßmündung 25a kann das Dichtungselement 23 kontaktieren.

Zum Öffnen des Gefäßes 25, kann der PT-Verschluss 21 durch eine Drehbewegung von dem Gefäß 25 entfernt werden.

Figuren 9 bis 11 zeigen einen Composite-Verschluss 41 (Band-Guard), der analog zu dem beschriebenen PT-Verschluss 21 funktionsfähig ist.

Der Composite-Verschluss 41 kann einen Träger mit einem metallischen Abschnitt 51 und einem Kunststoff-Abschnitt 52 umfassen. Der Composite-Verschluss 41 kann eine Originalitätssicherung 53 umfassen. Der Composite-Verschluss 41 kann einen optionalen Button 50a umfassen. Die Originalitätssicherung 53 kann so ausgestaltet sein, dass diese von dem übrigen Composite-Verschluss 41 entfernt werden kann, wenn der Composite-Verschluss 41 von einem Gefäß 45 entfernt wird, und kann der Überprüfbarkeit eines Verbrauchers dienen, ob der Composite-Verschluss 41 bereits von dem Gefäß 45 entfernt wurde. Der Button 50a kann analog zu dem Button 10b des Nockendrehverschlusses 1 ausgestaltet und funktionsfähig sein.

Der Kunststoff-Abschnitt des Composite-Verschluss 41 kann mehrere axial verlaufende Einbuchtungen 56 umfassen, um die Stabilität des Verschlusses zu erhöhen.

Ein Dichtungselement 43 kann so in dem Composite-Verschluss 41 angeordnet sein, dass dieses sowohl den metallischen Abschnitt 51 als auch den Kunststoff-Abschnitt 52 kontaktiert. Zum Verschließen eines Gefäßes 45 kann der Composite-Verschluss 41 auf die Gefäßmündung 45a des Gefäßes 45 aufgepresst werden, sodass zumindest das obere Ende 44 der Gefäßmündung 45a das Dichtungselement 43 kontaktieren kann.

Der Kunststoff-Abschnitt 52 des Trägers kann mehrere versetzte Vorsprünge 54 umfassen, die mit Gewindeelementen 46 der Gefäßmündung 45a interagieren können. Zum Öffnen eines Gefäßes 45, das mit dem Composite-Verschluss 41 verschlossen ist, kann der Composite-Verschluss 41 relativ zu dem Gefäß 45 verdreht werden.

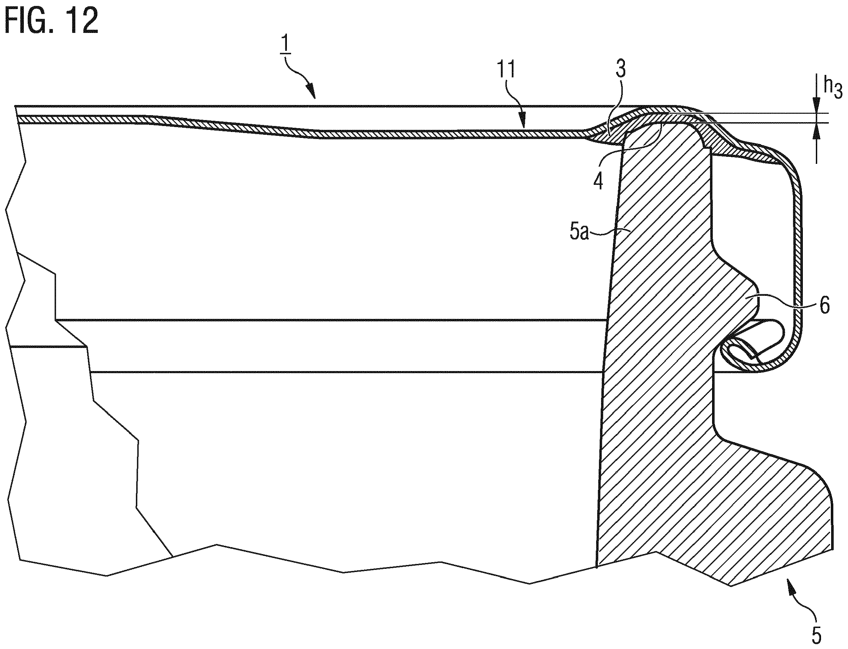

Der Abstand h₃ eines Dichtungselements 3 zwischen einem oberen Ende 4 einer Gefäßmündung 5a eines Gefäßes 5 und der unteren Seite eines Trägers 11 des Verschlusses 1 ist in Figur 12 mit Blick auf einen Nockendrehverschluss 1 dargestellt und hier beschrieben. Analog kann der Abstand (Höhe) h₃ für andere Verschluss-Typen zu bestimmen sein.

Das zwischen der Gefäßmündung 5 und dem Träger 11 des Gefäßverschlusses 1 eingeklemmte Dichtungselement 3 kann eine Höhe h₃ besitzen, die gegeben ist, wenn ein Gefäß 5 mit dem Verschluss 1 verschlossen ist. Ist die Höhe h₃ zu gering kann eine Durchschneidung des Dichtungselements 3 drohen oder erfolgen, wodurch die Dichtigkeit des verschlossenen Gefäßes 5 beeinträchtigt sein kann. Ist die Höhe h₃ zu groß, kann die Dichtigkeit des verschlossenen Gefäßes beeinträchtigt werden, da die Kontaktfläche zwischen dem oberen Ende 4 der Gefäßmündung 5a und dem Dichtungselement 3 nicht ausreichend groß ist. Um einen passenden Eindruck des oberen Endes 4 der Gefäßmündung 5a in das Dichtungselement zu erreichen, ist die Zusammensetzung des Dichtungselements 3 maßgebend.

### Erste Beispiele

Beispiele von Polymerzusammensetzungen für Dichtungselemente in einem Gefäßverschluss sind in den folgenden Tabellen dargestellt.

**Tabelle 1**

| | **Beispiel 1** | **Beispiel 2** | **Beispiel 3** | **Beispiel 4** | **Beispiel 5** |
|---|---|---|---|---|---|
| **Komponente, Gew.-%** | | | | | |
| C4C2 | 71,9 | | 71,9 | | 71,9 |
| C2C8 | | 71,9 | | 71,9 | |
| COC I | 24,0 | 24,0 | | | |
| COC II | | | 24,0 | 24,0 | |
| COC III | | | | | 24,0 |
| COC IV | | | | | |
| PAO | | | | | |
| Additive | 4,1 | 4,1 | 4,1 | 4,1 | 4,1 |

| **Eigenschaften** | | | | | |
|---|---|---|---|---|---|
| Reibungskoeffizient, dimensionslos | 0,47 | | 0,26 | | 0,33 |
| Gesamtmigration, mg cm⁻² | 0,8 | | 0,4 | | 0,5 |
| OTR, cm³ m⁻² d⁻¹ ba⁻¹ | 562 | | 117 | | 219 |
| DVR 70 °C, % | 108 | | 115 | | 115 |
| Shore A 23 °C, dimensionslos | 73 | | 90 | | 85 |
| DSC Tm max, °C | 85 | | no | | no |

**Tabelle 2**

| | **Beispiel 6** | **Beispiel 7** | **Beispiel 8** | **Beispiel 9** | **Beispiel 10** |
|---|---|---|---|---|---|
| **Komponente, Gew.-%** | | | | | |
| C4C2 | | 71,9 | | | |
| C2C8 | 71,9 | | 71,9 | | |
| COC I | | | | 85,9 | 75,9 |
| COC II | | | | | |
| COC III | 24,0 | | | | |
| COC IV | | 24,0 | 24,0 | | |
| PAO | | | | 10,0 | 20,0 |
| Additive | 4,1 | 4,1 | 4,1 | 4,1 | 4,1 |

| **Eigenschaften** | | | | | |
|---|---|---|---|---|---|
| Reibungskoeffizient, dimensionslos | | 0,25 | | 0,21 | 0,15 |
| Gesamtmigration, mg cm⁻² | | 0,4 | | 1,1 | 1,8 |
| OTR, cm³ m⁻² d⁻¹ ba⁻¹ | | 197 | | 251 | 363 |
| DVR 70 °C, % | | 112 | | 94 | 21 |
| Shore A 23 °C, dimensionslos | | 86 | | 84 | 71 |
| DSC Tm max, °C | | no | | 85 | 110 |

**Tabelle 3**

| | **Beispiel 11** | **Beispiel 12** | **Beispiel 13** | **Beispiel 14** | **Beispiel 15** | **Beispiel 16** |
|---|---|---|---|---|---|---|
| **Komponente Gew.-%** | | | | | | |
| C4C2 | | | | | 71,9 | 71,9 |
| COC I | 95,9 | 71,9 | 71,9 | 71,9 | | |
| COC IV | | 24,0 | | | | |
| COC V | | | 24,0 | | 24,0 | |
| COC VI | | | | 24,0 | | 24,0 |
| Additive | 4,1 | 4,1 | 4,1 | 4,1 | 4,1 | 4,1 |

- C4C2: ist ein 1-Buten-Ethen-Copolymer mit einem 1-Buten-Anteil von mehr als 80 %. Die Dichte beträgt 0,870 g cm⁻³. Die Shore A Härte beträgt 60.
- C2C8: ist ein Ethen-l-Octen-Blockcopolymer mit einem Druckverformungsrest bei 70 °C von 70 % und einer Shore A Härte (23 °C) von 60. Es können beispielsweise olefinische Block-Copolymere der Serie Infuse^{™} von Dow eingesetzt werden.
- COC I: ist ein Cycloolefin-Copolymer aus den Monomeren Ethen und Norbornen (Bicyclo[2.2.1]hept-2-en). Die Shore A Härte beträgt etwa 89. Die Glasübergangstemperatur Tg beträgt etwa 6 °C (bestimmt durch ISO 11357-1,- 2,-3, 10 °C/min). Die Dichte beträgt etwa 0,940 g cm⁻³.
- COC II: ist ein Cycloolefin-Copolymer aus den Monomeren Ethen und Norbornen (Bicyclo[2.2.1]hept-2-en). Die Shore D Härte beträgt etwa 77. Die Glasübergangstemperatur Tg beträgt etwa 65 °C (bestimmt durch ISO 11357-1,- 2,-3, 10 °C/min). Die Dichte beträgt etwa 1,010 g cm⁻³.
- COC III: ist ein Cycloolefin-Copolymer aus den Monomeren Ethen und Norbornen (Bicyclo[2.2.1]hept-2-en). Die Shore D Härte beträgt etwa 77. Die Glasübergangstemperatur Tg beträgt etwa 78 °C (bestimmt durch ISO 11357-1,- 2,-3, 10 °C/min). Die Dichte beträgt etwa 1,010 g cm⁻³.
- COC IV: ist ein Cycloolefin-Copolymer aus den Monomeren Ethen und Norbornen (Bicyclo[2.2.1]hept-2-en). Die Shore D Härte beträgt etwa 79. Die Glasübergangstemperatur Tg beträgt etwa 138 °C (bestimmt durch ISO 11357-1,-2,-3, 10 °C/min). Die Dichte beträgt etwa 1,020 g cm⁻³.
- COC V: ist ein Cycloolefin-Copolymer aus den Monomeren Ethen und Norbornen (Bicyclo[2.2.1]hept-2-en). Die Glasübergangstemperatur Tg beträgt etwa 158 °C (bestimmt durch ISO 11357-1,-2,-3, 10 °C/min). Die Dichte beträgt etwa 1,020 g cm⁻³.
- COC VI: ist ein Cycloolefin-Copolymer aus den Monomeren Ethen und Norbornen (Bicyclo[2.2.1]hept-2-en). Die Glasübergangstemperatur Tg beträgt etwa 178 °C (bestimmt durch ISO 11357-1,-2,-3, 10 °C/min). Die Dichte beträgt etwa 1,020 g cm⁻³.
- PAO: ist ein (Metallocen)Polyalphaolefin (alpha-Decen-Homopolymer) mit einer kinematischen Viskosität bei 100 °C von etwa 65 cSt.

Die Cycloolefin-Copolymere (COC I bis COC VI) sind von "TOPAS Advanced Polymers" erhältlich.

Der Reibungskoeffizient ist der statische Reibungskoeffizient bestimmt nach
DIN EN ISO 8295.

Allgemein kann die Polymerzusammensetzung einen statischen Reibungskoeffizienten von höchstens 1,0, bevorzugt höchstens 0,8, bevorzugter maximal 0,7, aufweisen.

Die Gesamtmigration ist nach DIN-EN 1186-14 bestimmt.

Der OTR (Sauerstoffdurchlässigkeitsrate) ist nach DIN 53380 bestimmt.

Der DVR (Druckverformungsrest) ist nach ASTM D 395, 70 °C, 22 h, bestimmt.

Die Shore A Härte ist bei einer Temperatur von 23 °C und einer Haltezeit von 15 S bestimmt (DIN ISO 7619). Die Shore D Härte ist analog bestimmt (DIN ISO 7619, 23 °C, 15 s).

Die Schmelztemperatur Tₘ wurde durch eine zweite Aufheizkurve einer DSC-Messung bei einer Heizrate von 10 °C min⁻¹ bestimmt. Ein Wert von "no" bedeutet, dass keine Schmelztemperatur bestimmt werden konnte, eine Schmelztemperatur in der Zusammensetzung also nicht vorliegt.

Allgemein ist keine spezifische Komponente zwingend in der Polymerzusammensetzung vorhanden. Speziell ist ein vermehrtes Auftreten einer Komponente in den Beispielen kein Indiz dafür, dass diese Komponente zwingend in der Polymerzusammensetzung enthalten sein muss. Vielmehr können Komponenten aus den Zusammensetzungen der Beispiele weggelassen oder durch andere Komponente(n) ersetzt werden. Ebenso können Komponenten hinzugefügt werden.

Die Gewichtsanteile der Komponenten in den Zusammensetzungen und die Eigenschaften der Zusammensetzungen der Beispiele sind exemplarisch. Die Offenbarung ist nicht auf die Werte der Gewichtsanteile der Komponenten und/oder die Werte der Eigenschaften der Beispiele beschränkt.

### Weitere Beispiele

Nachfolgend sind Beispiele als Ausführungsformen dargestellt, wobei die vorangestellte Nummer die Nummer des Beispiels repräsentiert.
1. Gefäßverschluss (1, 21, 41, 61) mit einem Dichtungselement (3, 23, 43, 63), wobei das Dichtungselement (3, 23, 43, 63) eine Polymerzusammensetzung umfasst, wobei die Polymerzusammensetzung umfasst:
   (a) zumindest 1 Gew.-% eines Cycloolefin-Polymers, und/oder
   (b) wobei die Sauerstoffdurchlässigkeitsrate der Polymerzusammensetzung, bestimmt nach DIN 53380,
      maximal 3000 cm³ m⁻² d⁻¹ bar⁻¹ beträgt.
2. Gefäßverschluss nach Beispiel 1, wobei das Cycloolefin-Polymer eine Shore A Härte, bestimmt nach DIN ISO 7619 bei einer Temperatur von 23 °C und einer Haltezeit von 15 s, von zumindest 40 aufweist, bevorzugt zumindest 50, bevorzugter zumindest 60.
3. Gefäßverschluss nach einem der Beispiele 1 oder 2, wobei das Cycloolefin-Polymer eine Shore A Härte, bestimmt nach DIN ISO 7619 bei einer Temperatur von 23 °C und einer Haltezeit von 15 s von zumindest 70 aufweist.
4. Gefäßverschluss nach einem der vorhergehenden Beispiele, wobei das Cycloolefin-Polymer eine Shore D Härte, bestimmt nach DIN ISO 7619 bei einer Temperatur von 23 °C und einer Haltezeit von 15 s, von zumindest 20 aufweist, bevorzugt zumindest 30, bevorzugter zumindest 40, bevorzugter zumindest 50, bevorzugter zumindest 60, am meisten bevorzugt zumindest 70.
5. Gefäßverschluss nach einem der vorhergehenden Beispiele, wobei das Cycloolefin-Polymer eine Dichte, bestimmt nach ISO 1183, von zumindest 0,850 g cm⁻³ aufweist, bevorzugt zumindest 0,870 g cm⁻³, bevorzugter von zumindest 0,890 g cm⁻³, bevorzugter von zumindest 0,910 g cm⁻³, bevorzugter von zumindest 0,930 g cm⁻³, bevorzugter von zumindest 0,950 g cm⁻³, bevorzugter von zumindest 0,970 g cm⁻³, bevorzugter von zumindest 0,990 g cm⁻³, bevorzugter von zumindest 1,010 g cm⁻³, am meisten bevorzugt zwischen 0,920 g cm⁻³ und 1,050 g cm⁻³.
6. Gefäßverschluss nach einem der vorhergehenden Beispiele, wobei das Cycloolefin-Polymer eine Glasübergangstemperatur, bestimmt nach ISO 11357-1,-2,-3, 10 °C/min, von zumindest -20 °C, bevorzugt zumindest 0 °C, bevorzugter zumindest 3 °C, bevorzugter zumindest 40 °C, bevorzugter zumindest 60 °C, bevorzugter zumindest 70 °C, bevorzugter zumindest 90 °C, bevorzugter zumindest 110 °C, bevorzugter zumindest 125 °C, bevorzugter zumindest 130 °C, bevorzugter zumindest 150 °C, bevorzugter zumindest 170 °C, am meisten bevorzugt zwischen 0 °C und 190 °C.
7. Gefäßverschluss nach einem der vorhergehenden Beispiele, wobei ein (Co)Monomer des Cycloolefin-Polymers ein monocyclisches oder polycyclisches Olefin ist, bevorzugt ist das (Co)Monomer ein monocyclisches oder polycyclisches C3- bis C20-Olefin, bevorzugter ein monocyclisches oder polycyclisches C5- bis C20-Olefin, bevorzugter ein monocyclisches oder polycyclisches C7- bis C17-Olefin, bevorzugter ein monocyclisches oder polycyclisches C7- bis C12-Olefin, bevorzugter ein monocyclisches oder polycyclisches C7-Olefin, am meisten bevorzugt Norbornen.
8. Gefäßverschluss nach einem der vorhergehenden Beispiele, wobei das Cycloolefin-Polymer durch ringerhaltende oder durch ringöffnende Polymerisation hergestellt ist.
9. Gefäßverschluss nach einem der vorhergehenden Beispiele, wobei das Cycloolefin-Polymer ein Cycloolefin-Copolymer ist.
10. Gefäßverschluss nach Beispiel 9, wobei ein (Co)Monomer des Cycloolefin-Copolymers ein C2- bis C10-(alpha)Olefin ist, bevorzugt ein C2- bis C8-(alpha)Olefin, bevorzugter ein C2- bis C6-(alpha)Olefin, am meisten bevorzugt Ethen.
11. Gefäßverschluss nach Beispiel 9 oder 10, wobei ein monocyclisches oder polycyclisches Olefin als Comonomer des Cycloolefin-Copolymers einen Comonomeranteil von mindestens 10 mol-%, bevorzugt von mindestens 20 mol-%, bevorzugter von mindestens 40 mol-%, bevorzugter von mindestens 60 mol-%, bevorzugter von mindestens 65 mol-%, aufweist.
12. Gefäßverschluss nach einem der Beispiele 9 bis 11, wobei Ethen als Comonomer des Cycloolefin-Copolymers einen Comonomeranteil von höchstens 90 mol-%, bevorzugt von höchstens 80 mol-%, bevorzugter von höchstens 60 mol-%, bevorzugter von höchstens 40 mol-%, bevorzugter von höchstens 35 mol-%, aufweist.
13. Gefäßverschluss nach einem der vorhergehenden Beispiele, wobei das Cycloolefin-Polymer ein Ethen-Norbornen-Copolymer ist.
14. Gefäßverschluss nach einem der vorhergehenden Beispiele, wobei das Cycloolefin-Polymer zu höchstens 95 Gew.-%, bevorzugt zu höchstens 85 Gew.-%, bevorzugter zu höchstens 50 Gew.-%, bevorzugter zu höchstens 40 Gew.-%, bevorzugter zu höchstens 30 Gew.-%, in der Polymerzusammensetzung enthalten ist.
15. Gefäßverschluss nach einem der vorhergehenden Beispiel, wobei die Polymerzusammensetzung bis zu 95 Gew.-% eines weiteren Polymers umfasst, insbesondere wobei die Polymerzusammensetzung zwischen 1 Gew.-% und 95 Gew.-% eines weiteren Polymers umfasst.
16. Gefäßverschluss nach Beispiel 15, wobei das weitere Polymer ein (random oder Block)Copolymer ist, bevorzugt wobei Ethen und zumindest ein C3 bis C16(alpha-) Olefin Comonomere des (random oder Block)Copolymers sind, bevorzugter wobei Ethen und zumindest ein C3 bis C8 (alpha-)Olefin Comonomere des (random oder Block)Copolymers sind.
17. Gefäßverschluss nach Beispiel 16, wobei Ethen als Comonomer des (random oder Block)Copolymers einen Comonomeranteil von mehr als 50 mol-%, bevorzugt von mehr als 60 mol-%, bevorzugter von mehr als 70 mol-%, aufweist.
18. Gefäßverschluss nach Beispiel 16 oder 17, wobei Ethen und ein C3 bis C16(alpha-) Olefin, bevorzugt Ethen und ein C3 bis C8(alpha-)Olefin, Comonomere des (random oder Block)Copolymers sind, am meisten bevorzugt das weitere Polymer ein Ethen-Octen-Blockcopolymer ist.
19. Gefäßverschluss nach Beispiel 16, wobei Ethen als Comonomer des (random oder Block)Copolymers einen Comonomeranteil von weniger als 50 mol-%, bevorzugt von weniger als 40 mol-%, bevorzugter von weniger als 30 mol-%, bevorzugter von weniger als 20 mol-%, aufweist.
20. Gefäßverschluss nach Beispiel 19, wobei ein C3 bis C16(alpha-)Olefin und Ethen, bevorzugt ein C3 bis C8(alpha-)Olefin und Ethen, Comonomere des (random oder Block)Copolymers sind, am meisten bevorzugt das weitere Polymer ein (random) Buten-Ethen-Copolymer ist.
21. Gefäßverschluss nach Beispiel 16, wobei Ethen als Comonomer des (random oder Block)Copolymers einen Comonomeranteil von mehr als 30 mol-%, bevorzugt von mehr als 40 mol-%, bevorzugter von mehr als 50 mol-%, bevorzugter von mehr als 55 mol-%, aufweist.
22. Gefäßverschluss nach einem der vorhergehenden Beispiele, wobei die Polymerzusammensetzung ein weiteres Cycloolefin-Polymer umfasst.
23. Gefäßverschluss nach Beispiel 22, wobei das weitere Cycloolefin-Polymer zu höchstens 80 Gew.-%, bevorzugt höchstens 70 Gew.-%, bevorzugter höchstens 60 Gew.-%, bevorzugter höchstens 50 Gew.-%, bevorzugter höchstens 40 Gew.-%, bevorzugter höchstens 30 Gew.-%, in der Polymerzusammensetzung enthalten ist.
24. Gefäßverschluss nach einem der vorhergehenden Beispiele, wobei die Polymerzusammensetzung weniger als 10 Gew.-%, bevorzugt weniger als 5 Gew.-%, bevorzugter weniger als 2 Gew.-%, Polyvinylchlorid enthält, am meisten bevorzugt die Polymerzusammensetzung frei von Polyvinylchlorid ist.
25. Gefäßverschluss nach einem der vorhergehenden Beispiele, wobei die Polymerzusammensetzung zwischen 1 Gew.-% und 60 Gew.-%, bevorzugt zwischen 1 Gew.-% und 45 Gew.-%, bevorzugter zwischen 1 Gew.-% und 30 Gew.-%, einer bei 20 °C und 1 bar flüssigen Komponente enthält.
26. Gefäßverschluss nach Beispiel 25, wobei die flüssige Komponente ein Polyalphaolefin mit einer kinematischen Viskosität, bestimmt nach ASTM D445 / ISO 3104, von zumindest 4 cSt, bei einer Temperatur von 100 °C, und/oder mit einem Tropfpunkt, bestimmt nach ASTM 5950, von höchstens -10 °C, enthält oder ist.
27. Gefäßverschluss nach Beispiel 26, wobei das Polyalphaolefin eine kinematische Viskosität bei einer Temperatur von 100 °C, bestimmt nach ASTM D445 / ISO 3104, zwischen 4 cSt und 1500 cSt aufweist, bevorzugt zwischen 50 cSt und 1000 cSt, mehr bevorzugt zwischen 120 cSt und 1000 cSt, noch bevorzugter zwischen 250 cSt und 1000 cSt.
28. Gefäßverschluss nach Beispiel 26 oder 27, wobei das Polyalphaolefin einen Tropfpunkt, bestimmt nach ASTM 5950, von höchstens -20°C aufweist, bevorzugt von höchsten -30 °C.
29. Gefäßverschluss nach einem der Beispiele 26 bis 28, wobei das Polyalphaolefin eine Dichte, bestimmt nach ASTM D4052, von bis zu 0,860 g cm⁻³ aufweist, insbesondere zwischen 0,825 g cm⁻³ und 0,855 g cm⁻³.
30. Gefäßverschluss nach einem der Beispiele 26 bis 29, wobei das Polyalphaolefin ein mittleres Molekulargewicht Mw, bestimmt nach DIN 55672-1, von mindestens 440 Da, aufweist bevorzugt zwischen 440 Da und 12000 Da, besonders bevorzugt zwischen 1000 Da und 10000 Da, noch mehr bevorzugt zwischen 3000 Da und 10000 Da.
31. Gefäßverschluss nach einem der Beispiele 26 bis 30, wobei das Polyalphaolefin ein Metallocen-Polyalphaolefin ist, insbesondere das Polyalphaolefin unter Anwendung eines Metallocen-Katalysators hergestellt wurde.
32. Gefäßverschluss nach einem der Beispiele 26 bis 31, wobei das Polyalphaolefin ein Homopolymer oder ein Copolymer ist, insbesondere das Polyalphaolefin ein C3 bis C22 alpha-Olefin als (Co)Monomer umfasst.
33. Gefäßverschluss nach einem der Beispiele 26 bis 32, wobei das Polyalphaolefin ein C6 bis C14 alpha-Olefin, bevorzugt ein C8 bis C10 alpha-Olefin, als (Co)Monomer umfasst.
34. Gefäßverschluss nach einem der Beispiele 1 bis 14 und 24 bis 25, wobei die Polymerzusammensetzung höchstens eine polymere Komponente enthält, insbesondere wobei das Cycloolefin-Polymer die eine polymere Komponente ist.
35. Gefäßverschluss nach einem der Beispiele 1 bis 24 und 34, wobei die Polymerzusammensetzung weniger als 10 Gew.-%, bevorzugt weniger als 5 Gew.-%, bevorzugter weniger als 2 Gew.-%, einer bei 20 °C und 1 bar flüssigen Komponente enthält, am meisten bevorzugt die Polymerzusammensetzung frei von einer Komponente ist, die bei 20 °C und 1 bar flüssig ist.
36. Gefäßverschluss nach einem der vorhergehenden Beispiele, wobei die Polymerzusammensetzung bis zu 15 Gew.-%, bevorzugt bis zu 8 Gew.-%, besonders bevorzugt bis zu 6 Gew.-%, am meisten bevorzugt bis zu 5 Gew.-%, Additive umfasst.
37. Gefäßverschluss nach dem vorhergehenden Beispiel, wobei die Additive ausgewählt sind aus der Gruppe bestehend aus: Pigmente, Nukleierungsmittel, Aufheller, Stabilisatoren, Tenside, Gleitmittel, Antioxidantien und Kombinationen davon.
38. Gefäßverschluss nach einem der vorhergehenden Beispiele, wobei die Polymerzusammensetzung eine Shore A Härte, bestimmt nach DIN ISO 7619 bei einer Temperatur von 23 °C und einer Haltezeit von 15 s, von zumindest 40, bevorzugt zumindest 50, bevorzugter zumindest 60, bevorzugter zumindest 70, bevorzugter zumindest 80, aufweist.
39. Gefäßverschluss nach einem der vorhergehenden Beispiele, wobei die Polymerzusammensetzung einen Druckverformungsrest, bestimmt nach ASTM D 395, 70 °C, 22 h, von zumindest 50 %, bevorzugt von zumindest 60 %, bevorzugter von zumindest 70 %, bevorzugter von zumindest 80 %, bevorzugter von zumindest 90 %, aufweist.
40. Gefäßverschluss nach einem der vorhergehenden Beispiele, wobei die Polymerzusammensetzung eine Gesamtmigration, bestimmt nach DIN-EN 1186-14, von maximal 5,5 mg cm⁻², bevorzugt von maximal 3,5 mg cm⁻², bevorzugter von maximal 2,5 mg cm⁻², bevorzugter von maximal 1,5 mg cm⁻², bevorzugter von maximal 1,0 mg cm⁻², bevorzugter von maximal 0,7 mg cm⁻², aufweist.
41. Gefäßverschluss nach einem der vorhergehenden Beispiele, wobei die Polymerzusammensetzung eine Sauerstoffdurchlässigkeitsrate von weniger als 1700 cm³ m⁻² d⁻¹ bar⁻¹, bevorzugt von weniger als 1400 cm³ m⁻² d⁻¹ bar⁻¹, bevorzugter von weniger als 1100 cm³ m⁻² d⁻¹ bar⁻¹, bevorzugter von weniger als 800 cm³ m⁻² d⁻¹ bar⁻¹, bevorzugter von weniger als 700 cm³ m⁻² d⁻¹ bar⁻¹, bevorzugter von weniger als 600 cm³ m⁻² d⁻¹ bar⁻¹, bevorzugter von weniger als 500 cm³ m⁻² d⁻¹ bar⁻¹, bevorzugter von weniger als 400 cm³ m⁻² d⁻¹ bar⁻¹, bevorzugter von weniger als 300 cm³ m⁻² d⁻¹ bar⁻¹, aufweist.
42. Gefäßverschluss nach einem der vorhergehenden Beispiele, wobei die Polymerzusammensetzung, bestimmt durch eine zweite Aufheizkurve einer DSC-Messung bei einer Heizrate von 10°C/min, eine SchmelztemperaturTm von zumindest 50 °C, bevorzugt zumindest 60 °C, bevorzugter zumindest 70 °C, aufweist.
43. Gefäßverschluss nach einem der vorhergehenden Beispiele, wobei die Polymerzusammensetzung, bestimmt durch eine zweite Aufheizkurve einer DSC-Messung bei einer Heizrate von 10°C/min, eine SchmelztemperaturTm von höchstens 150 °C, bevorzugt höchsten 120 °C, bevorzugter höchstens 100 °C, aufweist.
44. Gefäßverschluss nach einem der vorhergehenden Beispiele 1 bis 41, wobei die Polymerzusammensetzung, bestimmt durch eine zweite Aufheizkurve einer DSC-Messung bei einer Heizrate von 10°C/min, keine Schmelztemperatur Tm aufweist.
45. Gefäßverschluss nach einem der vorhergehenden Beispiele, wobei der Gefäßverschluss einen Träger (11, 31, 51, 71) und das Dichtungselement (3, 23, 43, 63) umfasst, wobei der Träger (11, 31, 51, 71) Metall und/oder Kunststoff umfasst, insbesondere Metall oder Kunststoff als Hauptbestandteil umfasst.
46. Gefäßverschluss nach einem der vorhergehenden Beispiele, wobei der Gefäßverschluss (1, 21, 41, 61) ein Schraubverschluss, insbesondere ein Nockendrehverschluss (1), ein Press-on-Twist-off-Verschluss (21) oder ein Composite-Verschluss (41, 61) ist.
**47. Gefäß** (5, 25, 45) mit einer Gefäßmündung (5a, 25a, 45a) und einer verschließbaren Öffnung am Ende der Gefäßmündung, wobei die Öffnung mit einem Gefäßverschluss (1, 21, 41, 61) nach einem der vorhergehenden Ansprüche verschlossen ist.
48. Gefäß nach Beispiel 47, wobei der Gefäßverschluss einen Träger (11, 31, 51, 71) und das Dichtungselement (3, 23, 43, 63) umfasst, und wobei das Dichtungselement zwischen einem oberen Ende (4, 24, 44) der Gefäßmündung und einer unteren Seite des Trägers (11, 31, 51, 71) eine Höhe (h₃) von maximal 1,0 mm, bevorzugt maximal 0,8 mm, besonders bevorzugt maximal 0,7 mm, in axialer Richtung des Gefäßes aufweist.
49. Gefäß nach Beispiel 47 oder 48, wobei der Gefäßverschluss einen Träger (11, 31, 51, 71) und das Dichtungselement (3, 23, 43, 63) umfasst, und wobei das Dichtungselement zwischen einem oberen Ende (4, 24, 44) der Gefäßmündung und einer unteren Seite des Trägers (11, 31, 51, 71) eine Höhe (h₃) von mindestens 0,2 mm, bevorzugt mindestens 0,4 mm, besonders bevorzugt mindestens 0,5 mm, in axialer Richtung des Gefäßes aufweist.
50. Gefäß nach einem der Beispiele 47 bis 49, wobei das Gefäß ein Sicherheitsmaß von maximal 10 mm, bevorzugt maximal 8 mm, besonders bevorzugt maximal 6 mm, am meisten bevorzugt maximal 4 mm, aufweist.
51. **Verfahren zur Herstellung** eines verschlossenen und befüllten Gefäßes, mit den Schritten:
   (a) Bereitstellen eines Gefäßes (1, 21, 41, 61) mit einer Gefäßmündung (5a, 25a, 45a) und einer verschließbaren Öffnung am Ende der Gefäßmündung;
   (b) Befüllen des Gefäßes mit einem Lebensmittel durch die Öffnung des Gefäßes;
   (c) Verschließen der Öffnung des Gefäßes mit einem Gefäßverschluss nach einem der vorhergehenden Beispiele.
52. Verfahren nach Beispiel 51, wobei der Gefäßverschluss bei einer Temperatur von mindestens 90 °C behandelt wird, bevor die Öffnung des Gefäßes mit dem Gefäßverschluss verschlossen wird.
53. Verfahren nach einem der Beispiele 51 oder 52, wobei der absolute Druck in dem verschlossenen und befüllten Gefäß maximal 200 hPa, bevorzugt maximal 100 hPa beträgt.
54. Verfahren nach einem der Beispiele 51 bis 53, wobei das Dichtungselement des Gefäßverschlusses während des Verschließens der Öffnung des Gefäßes mit dem Gefäßverschluss und/oder einer thermischen Behandlung des verschlossenen und befüllten Gefäßes um mindestens 0,2 mm, bevorzugt mindestens 0,4 mm, besonders bevorzugt mindestens 0,5 mm, in axialer Richtung des Gefäßes zur Bildung eines Eindrucks der Gefäßmündung in das Dichtungselement verformt wird.
55. Verfahren nach einem der Beispiele 51 bis 54, wobei das Dichtungselement des Gefäßverschlusses während des Verschließens der Öffnung des Gefäßes mit dem Gefäßverschluss und/oder einer thermischen Behandlung des verschlossenen und befüllten Gefäßes um maximal 1,0 mm, bevorzugt maximal 0,8 mm, besonders bevorzugt maximal 0,7 mm, in axialer Richtung Gefäßes zur Bildung eines Eindrucks der Gefäßmündung in das Dichtungselement verformt wird.

## Patentansprüche

1. **Gefäßverschluss** (1, 21, 41, 61) mit einem Dichtungselement (3, 23, 43, 63), wobei das Dichtungselement (3, 23, 43, 63) eine Polymerzusammensetzung umfasst, wobei die Polymerzusammensetzung umfasst:
(a) zumindest 1 Gew.-% eines Cycloolefin-Polymers, und
(b) wobei die Sauerstoffdurchlässigkeitsrate der Polymerzusammensetzung, bestimmt nach DIN 53380,
maximal 3000 cm³ m⁻² d⁻¹ ba⁻¹ beträgt.

2. Gefäßverschluss nach einem der vorhergehenden Ansprüche, wobei das Cycloolefin-Polymer eine Glasübergangstemperatur, bestimmt nach ISO 11357-1,-2,-3, 10 °C/min, von zumindest -20 °C, bevorzugt zumindest 0 °C, bevorzugter zumindest 3 °C, bevorzugter zumindest 40 °C, bevorzugter zumindest 60 °C, bevorzugter zumindest 70 °C, bevorzugter zumindest 90 °C, bevorzugter zumindest 110 °C, bevorzugter zumindest 125 °C, bevorzugter zumindest 130 °C, bevorzugter zumindest 150 °C, bevorzugter zumindest 170 °C, am meisten bevorzugt zwischen 0 °C und 190 °C.

3. Gefäßverschluss nach einem der vorhergehenden Ansprüche, wobei ein (Co)Monomer des Cycloolefin-Polymers ein monocyclisches oder polycyclisches Olefin ist, bevorzugt ist das Monomer ein monocyclisches oder polycyclisches C3- bis C20-Olefin, bevorzugter ein monocyclisches oder polycyclisches C5- bis C20-Olefin, bevorzugter ein monocyclisches oder polycyclisches C7- bis C17-Olefin, bevorzugter ein monocyclisches oder polycyclisches C7- bis C12-Olefin, bevorzugter ein monocyclisches oder polycyclisches C7-Olefin, am meisten bevorzugt Norbornen.

4. Gefäßverschluss nach einem der vorhergehenden Ansprüche, wobei ein (Co)Monomer des Cycloolefin-Copolymers ein C2- bis C10-(alpha)Olefin ist, bevorzugt ein C2- bis C8-(alpha)Olefin, bevorzugter ein C2- bis C6-(alpha)Olefin, am meisten bevorzugt Ethen.

5. Gefäßverschluss nach einem der vorhergehenden Ansprüche, wobei die Polymerzusammensetzung bis zu 95 Gew.-% eines weiteren Polymers umfasst.

6. Gefäßverschluss nach Anspruch 5, wobei das weitere Polymer ein (random oder Block)Copolymer ist, bevorzugt wobei Ethen und zumindest ein C3 bis C16(alpha-) Olefin Comonomere des (random oder Block)Copolymers sind, bevorzugter wobei Ethen und zumindest ein C3 bis C8 (alpha-)Olefin Comonomere des (random oder Block)Copolymers sind.

7. Gefäßverschluss nach Anspruch 6, wobei Ethen und ein C3 bis C16(alpha-)Olefin, bevorzugt Ethen und ein C3 bis C8(alpha-)Olefin, Comonomere des (random oder Block)Copolymers sind, am meisten bevorzugt das weitere Polymer ein Ethen-Octen-Blockcopolymer ist oder wobei das weitere Polymer ein Buten-Ethen-Copolymer.

8. Gefäßverschluss nach einem der vorhergehenden Ansprüche, wobei die Polymerzusammensetzung zwischen 1 Gew.-% und 60 Gew.-%, bevorzugt zwischen 1 Gew.-% und 45 Gew.-%, bevorzugter zwischen 1 Gew.-% und 30 Gew.-%, einer bei 20 °C und 1 bar flüssigen Komponente enthält.

9. Gefäßverschluss nach Anspruch 8, wobei die flüssige Komponente ein Polyalphaolefin mit einer kinematischen Viskosität, bestimmt nach ASTM D445 / ISO 3104, von zumindest 4 cSt, bei einer Temperatur von 100 °C, und/oder mit einem Tropfpunkt, bestimmt nach ASTM 5950, von höchstens -10 °C, enthält oder ist.

10. Gefäßverschluss nach einem der vorhergehenden Ansprüche, wobei die Polymerzusammensetzung eine Shore A Härte, bestimmt nach DIN ISO 7619 bei einer Temperatur von 23 °C und einer Haltezeit von 15 s, von zumindest 40, bevorzugt zumindest 50, bevorzugter zumindest 60, bevorzugter zumindest 70, bevorzugter zumindest 80, aufweist; und/oder
wobei die Polymerzusammensetzung einen Druckverformungsrest, bestimmt nach ASTM D 395, 70 °C, 22 h, von zumindest 50 %, bevorzugt von zumindest 60 %, bevorzugter von zumindest 70 %, bevorzugter von zumindest 80 %, bevorzugter von zumindest 90 %, aufweist.

11. Gefäßverschluss nach einem der vorhergehenden Ansprüche, wobei die Polymerzusammensetzung ein weiteres Cycloolefin-Polymer umfasst.

12. Gefäßverschluss nach einem der Ansprüche 1 bis 4 und 8 bis 10, wobei die Polymerzusammensetzung höchstens eine polymere Komponente enthält, insbesondere wobei das Cycloolefin-Polymer die eine polymere Komponente ist.

13. **Gefäß** (5, 25, 45) mit einer Gefäßmündung (5a, 25a, 45a) und einer verschließbaren Öffnung am Ende der Gefäßmündung, wobei die Öffnung mit einem Gefäßverschluss (1, 21, 41, 61) nach einem der vorhergehenden Ansprüche verschlossen ist, insbesondere wobei der Gefäßverschluss einen Träger (11, 31, 51, 71) und das Dichtungselement (3, 23, 43, 63) umfasst,
und wobei das Dichtungselement zwischen einem oberen Ende (4, 24, 44) der Gefäßmündung und einer unteren Seite des Trägers (11, 31, 51, 71) eine Höhe (h₃) von maximal 1,0 mm aufweist, bevorzugt maximal 0,8 mm, besonders bevorzugt maximal 0,7 mm, in axialer Richtung des Gefäßes.

14. **Verfahren zur Herstellung** eines verschlossenen und befüllten Gefäßes, mit den Schritten:
(a) Bereitstellen eines Gefäßes (1, 21, 41, 61) mit einer Gefäßmündung (5a, 25a, 45a) und einer verschließbaren Öffnung am Ende der Gefäßmündung;
(b) Befüllen des Gefäßes mit einem Lebensmittel durch die Öffnung des Gefäßes;
(c) Verschließen der Öffnung des Gefäßes mit einem Gefäßverschluss nach einem der Ansprüche 1 bis 12.

15. Verfahren nach Anspruch 14, wobei das Dichtungselement des Gefäßverschlusses während des Verschließens der Öffnung des Gefäßes mit dem Gefäßverschluss und/oder einer thermischen Behandlung des verschlossenen und befüllten Gefäßes um mindestens 0,2 mm, bevorzugt mindestens 0,4 mm, besonders bevorzugt mindestens 0,5 mm, in axialer Richtung des Gefäßes zur Bildung eines Eindrucks der Gefäßmündung in das Dichtungselement verformt wird.
